(19) Europäisches Patentamt / European Patent Office / Office européen des brevets

(11) **EP 4 187 986 A1**

(12) **EUROPEAN PATENT APPLICATION**
published in accordance with Art. 153(4) EPC

(43) Date of publication:
**31.05.2023 Bulletin 2023/22**

(21) Application number: **20946380.1**

(22) Date of filing: **22.07.2020**

(51) International Patent Classification (IPC):
*H04W 56/00* (2009.01)   *H04W 16/28* (2009.01)
*H04B 7/024* (2017.01)

(52) Cooperative Patent Classification (CPC):
**H04B 7/024; H04W 16/28; H04W 56/00**

(86) International application number:
**PCT/KR2020/009668**

(87) International publication number:
**WO 2022/019352 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics, Inc.**
**Yeongdeungpo-gu**
**Seoul 07336 (KR)**

(72) Inventors:
- **KIM, Sunam**
  **Seoul 06772 (KR)**
- **PARK, Sung Ho**
  **Seoul 06772 (KR)**
- **KIM, Minseog**
  **Seoul 06772 (KR)**
- **KIM, Jaehwan**
  **Seoul 06772 (KR)**

(74) Representative: **Plasseraud IP**
**66, rue de la Chaussée d'Antin**
**75440 Paris Cedex 09 (FR)**

(54) **SIGNAL TRANSMISSION AND RECEPTION METHOD AND APPARATUS FOR TERMINAL AND BASE STATION IN WIRELESS COMMUNICATION SYSTEM**

(57) A method of operating a user equipment (UE) and a base station in a wireless communication system and an apparatus supporting the same are disclosed. The method of operating the user equipment (UE) comprises obtaining signals from a plurality of transmission points (TPs), selecting at least one TP based on the signals obtained from the plurality of TPs, selecting a reference TP from the selected TP, obtaining reception time difference information based on the selected reference TP, and transmitting the obtained reception time difference information to the at least one TP.

FIG. 28

EP 4 187 986 A1

**Description**

**Technical Field**

The following description relates to a wireless communication system, and relates to a method and apparatus for transmitting and receiving a signal by a terminal and a base station in a wireless communication system.
In particular, it relates to a method and apparatus for transmitting and receiving a signal by a terminal and a base station based on a coordinated multi-point (CoMP) transmission scheme.

**Background Art**

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.
In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

**Disclosure**

**Technical Problem**

The present disclosure may provide a method of managing a CoMP transmission scheme in order for a terminal and a base station to transmit and receive signals in a wireless communication system.
The technical objects to be achieved in the present disclosure are not limited to the above-mentioned technical objects, and other technical objects that are not mentioned may be considered by those skilled in the art through the embodiments described below.

**Technical Solution**

The present disclosure a method of operating a user equipment (UE) in a wireless communication system, the method comprising: obtaining signals from a plurality of transmission points (TPs); selecting at least one TP based on the signals obtained from the plurality of TPs; selecting a reference TP from the selected TP; obtaining reception time difference information based on the selected reference TP; and transmitting the obtained reception time difference information to the at least one TP.
The present disclosure a user equipment (UE) operating in a wireless communication system, the UE comprising: at least one transmitter, at least one receiver, at least one processor; and at least one memory operably connected to the at least one processor and configured to store instructions for enabling the at least one processor to perform specific operations, wherein the specific operations comprise: obtaining signals from a plurality of transmission points (TPs), selecting at least one TP based on the signals obtained from the plurality of TPs, selecting a reference TP from the selected TP, obtaining reception time difference information based on the selected reference TP, and transmitting the obtained reception time difference information to the at least one TP.
The present disclosure the UE of claim 12, wherein the UE communicates with at least one of a mobile terminal, a network or an autonomous vehicle other than a vehicle including the UE.
In addition, the following items may be commonly applied to a method and apparatus for transmitting and receiving signals of a terminal and a base station to which the present disclosure is applied.
The present disclosure the reference TP is set based on at least one of a cell id, a beam index set or a transmission and reception (TRP) id.
The present disclosure the reception time difference information is transmitted to the reference TP.
The present disclosure the reception time difference information is transmitted to the reference TP along with at least one of cell id information, beam index information or TRP id information.
The present disclosure the reception time difference information is transmitted to at least one UE associated with the reference TP through the reference TP.

The present disclosure the reception time difference information is obtained by comparing a time of a signal received from the reference TP and a time of a signal received from the selected at least one TP other than the reference TP.

The present disclosure when a difference between the time of the signal received from the reference TP and the time of the signal received from the selected at least one TP is greater than cyclic prefix (CP), time adjustment is performed based on the reception time difference information.

The present disclosure the reception time difference information is set based on preset resolution.

The present disclosure the reception time difference information is set by further considering a preset table.

The present disclosure the TP is at least one of a base station, a remote radio head (RRH) or an access point (AP).

The present disclosure the TP is at least one of an array antenna set generating a beam within a transmission object, a panel or a reflector.

The above-described aspects of the present disclosure are only some of the preferred embodiments of the present disclosure, and various embodiments in which the technical features of the present disclosure are reflected are the detailed descriptions of the present disclosure to be detailed below by those of ordinary skill in the art. It can be derived and understood based on the description.

**Advantageous Effects**

The following effects may be obtained by embodiments based on the present disclosure.

According to the present disclosure, it is possible to perform communication based on a CoMP transmission scheme in a Terahertz (THz) band.

According to the present disclosure, it is possible to provide a method of reducing, by a terminal, inter symbol interference (ISI) occurring as a cyclic prefix (CP) period is shortened in a terahertz band.

According to the present disclosure, it is possible to provide a method of, by a terminal, reporting time difference information in a terahertz band.

According to the present disclosure, it is possible to provide a method of, by a terminal, performing time alignment and performing communication based on the aligned time.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

**Description of Drawings**

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 is a view showing an example of a communication system applicable to the present disclosure.
FIG. 2 is a view showing an example of a wireless apparatus applicable to the present disclosure.
FIG. 3 is a view showing another example of a wireless device applicable to the present disclosure.
FIG. 4 is a view showing an example of a hand-held device applicable to the present disclosure.
FIG. 5 is a view showing an example of a car or an autonomous driving car applicable to the present disclosure.
FIG. 6 is a view showing an example of a mobility applicable to the present disclosure.
FIG. 7 is a view showing an example of an extended reality (XR) device applicable to the present disclosure.
FIG. 8 is a view showing an example of a robot applicable to the present disclosure.
FIG. 9 is a view showing an example of artificial intelligence (AI) device applicable to the present disclosure.
FIG. 10 is a view showing physical channels applicable to the present disclosure and a signal transmission method using the same.
FIG. 11 is a view showing the structure of a control plane and a user plane of a radio interface protocol applicable to the present disclosure.
FIG. 12 is a view showing a method of processing a transmitted signal applicable to the present disclosure.
FIG. 13 is a view showing the structure of a radio frame applicable to the present disclosure.
FIG. 14 is a view showing a slot structure applicable to the present disclosure.
FIG. 15 is a view showing an example of a communication structure providable in a 6th generation (6G) system applicable to the present disclosure.

FIG. 16 is a view showing an electromagnetic spectrum applicable to the present disclosure.

FIG. 17 is a view showing a THz communication method applicable to the present disclosure.

FIG. 18 is a view showing a THz wireless communication transceiver applicable to the present disclosure.

FIG. 19 is a view showing a THz signal generation method applicable to the present disclosure.

FIG. 20 is a view showing a wireless communication transceiver applicable to the present disclosure.

FIG. 21 is a view showing a transmitter structure applicable to the present disclosure.

FIG. 22 is a view showing a modulator structure applicable to the present disclosure.

FIG. 23 is a diagram illustrating a method of performing communication based on a CoMP scheme in a terahertz band applicable to the present disclosure.

FIG. 24 is a diagram illustrating a method of performing communication based on a CoMP scheme in a terahertz band applicable to the present disclosure.

FIG. 25 is a diagram illustrating a method of performing time alignment based on a CoMP scheme in a terahertz band applicable to the present disclosure.

FIG. 26 is a diagram illustrating a method of performing time alignment based on a CoMP scheme in a terahertz band applicable to the present disclosure.

FIG. 27 is a diagram illustrating operations of a base station and a terminal based on a CoMP scheme in a terahertz band applicable to the present disclosure.

FIG. 28 is a diagram illustrating a method of operating a UE applicable to the present disclosure.

FIG. 29 is a diagram illustrating a method of operating a reference TP applicable to the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPPTS 36.211, 3GPPTS 36.212, 3GPPTS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

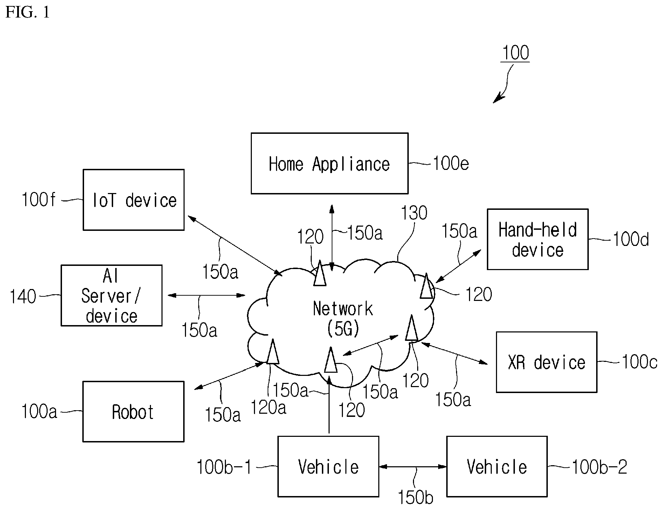

FIG. 1 is a view showing an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device. The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

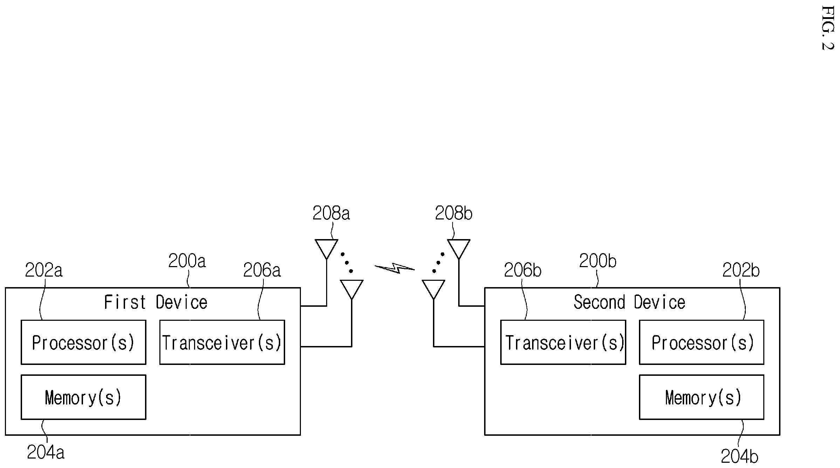

FIG. 2 is a view showing an example of a wireless device applicable to the present disclosure. Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip. The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip. Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein. One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be coupled with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computerreadable storage mediums and/or combinations thereof. One or more memories 204a and 204b may be located inside and/or outside one or more processors 202a and 202b. In addition, one or more memories 204a and 204b may be coupled with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be coupled with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be coupled with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

Structure of wireless device applicable to the present disclosure

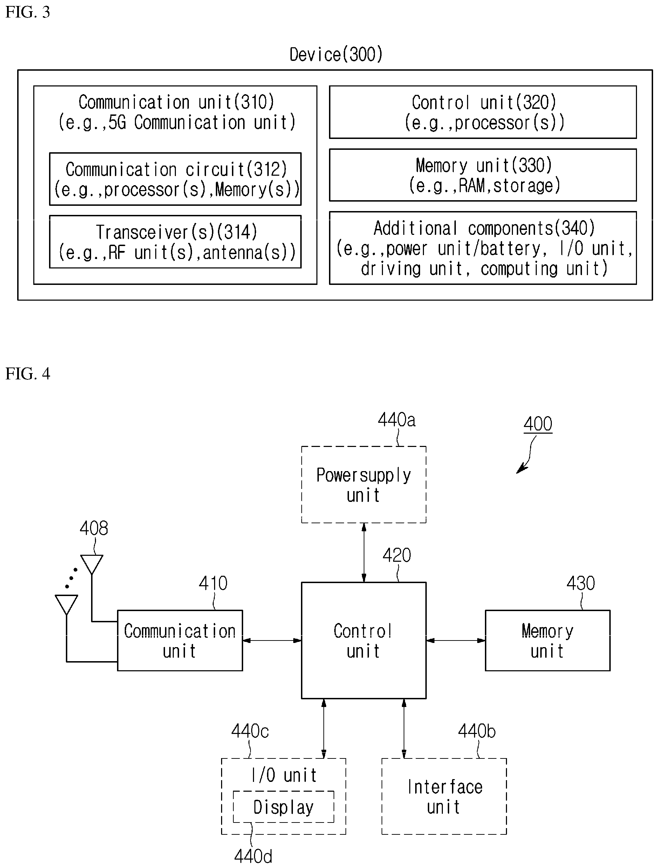

FIG. 3 is a view showing another example of a wireless device applicable to the present disclosure.

Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

Hand-held device applicable to the present disclosure

FIG. 4 is a view showing an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.

For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

Type of wireless device applicable to the present disclosure

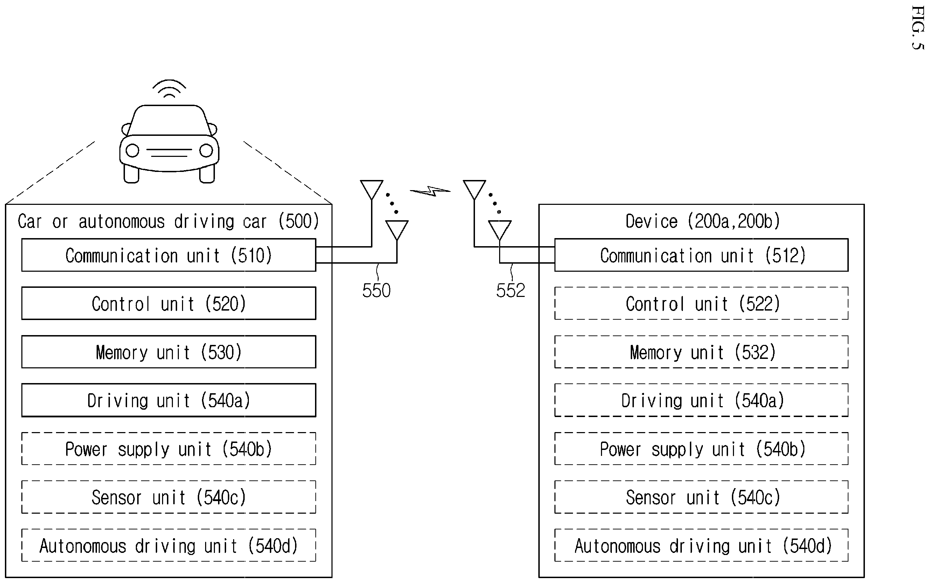

FIG. 5 is a view showing an example of a car or an autonomous driving car applicable to the present disclosure.
FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.
Referring to FIG. 5, the car or autonomous driving car 500 may include an antenna unit (antenna) 508, a communication unit (transceiver) 510, a control unit (controller) 520, a driving unit 540a, a power supply unit (power supply) 540b, a sensor unit 540c, and an autonomous driving unit 540d. The antenna unit 550 may be configured as part of the communication unit 510. The blocks 510/530/540a to 540d correspond to the blocks 410/430/440 of FIG. 4.
The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU). The driving unit 540a may drive the car or autonomous driving car 500 on the ground. The driving unit 540a may include an engine, a motor, a power train, wheels, a brake, a steering device, etc. The power supply unit 540b may supply power to the car or autonomous driving car 500, and include a wired/wireless charging circuit, a battery, etc. The sensor unit 540c may obtain a vehicle state, surrounding environment information, user information, etc. The sensor unit 540c may include an inertial navigation unit (IMU) sensor, a collision sensor, a wheel sensor, a speed sensor, an inclination sensor, a weight sensor, a heading sensor, a position module, a vehicle forward/reverse sensor, a battery sensor, a fuel sensor, a tire sensor, a steering sensor, a temperature sensor, a humidity sensor, an ultrasonic sensor, an illumination sensor, a brake pedal position sensor, and so on. The autonomous driving sensor 540d may implement technology for maintaining a driving lane, technology for automatically controlling a speed such as adaptive cruise control, technology for automatically driving the car along a predetermined route, technology for automatically setting a route when a destination is set and driving the car, etc.
For example, the communication unit 510 may receive map data, traffic information data, etc. from an external server. The autonomous driving unit 540d may generate an autonomous driving route and a driving plan based on the acquired data. The control unit 520 may control the driving unit 540a (e.g., speed/direction control) such that the car or autonomous driving car 500 moves along the autonomous driving route according to the driving plane. During autonomous driving, the communication unit 510 may aperiodically/periodically acquire latest traffic information data from an external server and acquire surrounding traffic information data from neighboring cars. In addition, during autonomous driving, the sensor unit 540c may acquire a vehicle state and surrounding environment information. The autonomous driving unit 540d may update the autonomous driving route and the driving plan based on newly acquired data/information. The communication unit 510 may transmit information such as a vehicle location, an autonomous driving route, a driving plan, etc. to the external server. The external server may predict traffic information data using AI technology or the like based on the information collected from the cars or autonomous driving cars and provide the predicted traffic information data to the cars or autonomous driving cars.

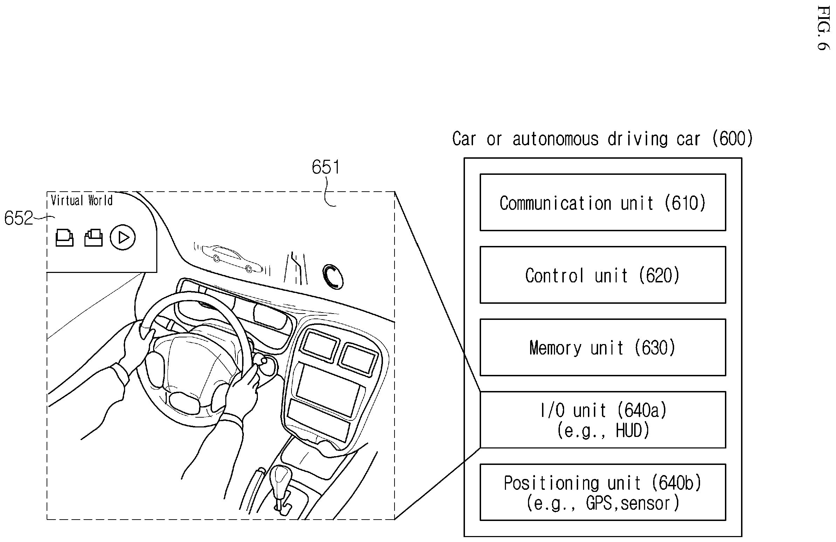

FIG. 6 is a view showing an example of a mobility applicable to the present disclosure.
Referring to FIG. 6, the mobility applied to the present disclosure may be implemented as at least one of a transportation means, a train, an aerial vehicle or a ship. In addition, the mobility applied to the present disclosure may be implemented in the other forms and is not limited to the above-described embodiments.
At this time, referring to FIG. 6, the mobility 600 may include a communication unit (transceiver) 610, a control unit (controller) 620, a memory unit (memory) 630, an input/output unit 640a and a positioning unit 640b. Here, the blocks 610 to 630/640a to 640b may corresponding to the blocks 310 to 330/340 of FIG. 3.
The communication unit 610 may transmit and receive signals (e.g., data, control signals, etc.) to and from external devices such as another mobility or a base station. The control unit 620 may control the components of the mobility 600 to perform various operations. The memory unit 630 may store data/parameters/programs/code/instructions supporting the various functions of the mobility 600. The input/output unit 640a may output AR/VR objects based on information in the memory unit 630. The input/output unit 640a may include a HUD. The positioning unit 640b may acquire the position information of the mobility 600. The position information may include absolute position information of the mobility 600, position information in a driving line, acceleration information, position information of neighboring vehicles, etc. The positioning unit 640b may include a global positioning system (GPS) and various sensors.
For example, the communication unit 610 of the mobility 600 may receive map information, traffic information, etc. from an external server and store the map information, the traffic information, etc. in the memory unit 630. The positioning unit 640b may acquire mobility position information through the GPS and the various sensors and store the mobility position information in the memory unit 630. The control unit 620 may generate a virtual object based on the map information, the traffic information, the mobility position information, etc., and the input/output unit 640a may display the generated virtual object in a glass window (651 and 652). In addition, the control unit 620 may determine whether the mobility 600 is normally driven in the driving line based on the mobility position information. When the mobility 600 abnormally deviates from the driving line, the control unit 620 may display a warning on the glass window of the mobility through the input/output unit 640a. In addition, the control unit 620 may broadcast a warning message for driving abnormality to neighboring mobilities through the communication unit 610. Depending on situations, the control unit 620 may transmit the position information of the mobility and information on driving/mobility abnormality to a related institution through the communication unit 610.

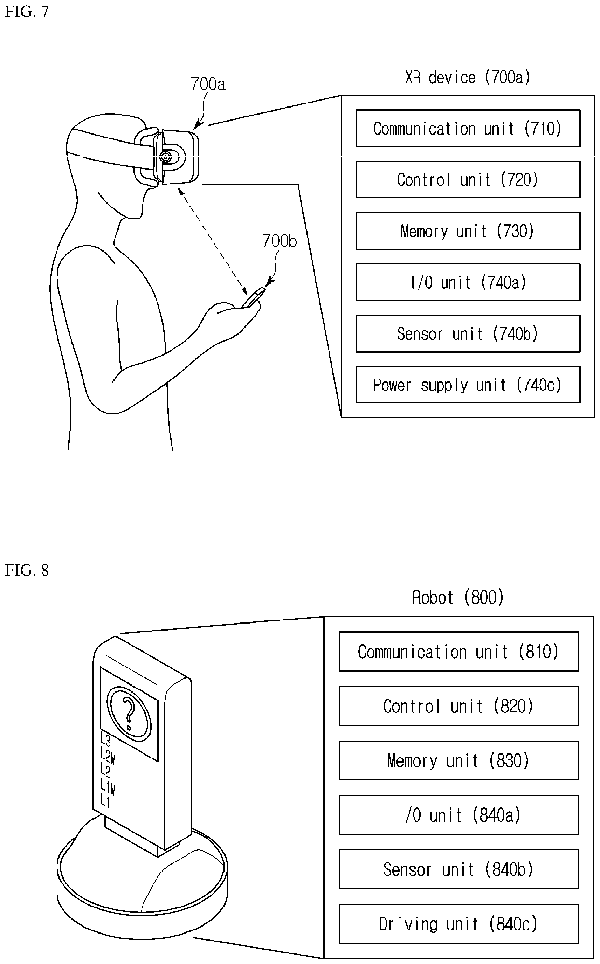

FIG. 7 is a view showing an example of an XR device applicable to the present disclosure. The XR device may be implemented as a HMD, a head-up display (HUD) provided in a vehicle, a television, a smartphone, a computer, a wearable device, a home appliance, a digital signage, a vehicle, a robot, etc.

Referring to FIG. 7, the XR device 700a may include a communication unit (transceiver) 710, a control unit (controller) 720, a memory unit (memory) 730, an input/output unit 740a, a sensor unit 740b and a power supply unit (power supply) 740c. Here, the blocks 710 to 730/740a to 740c may correspond to the blocks 310 to 330/340 of FIG. 3, respectively.

The communication unit 710 may transmit and receive signals (e.g., media data, control signals, etc.) to and from external devices such as another wireless device, a hand-held device or a media server. The media data may include video, image, sound, etc. The control unit 720 may control the components of the XR device 700a to perform various operations. For example, the control unit 720 may be configured to control and/or perform procedures such as video/image acquisition, (video/image) encoding, metadata generation and processing. The memory unit 730 may store data/parameters/programs/code/instructions necessary to drive the XR device 700a or generate an XR object.

The input/output unit 740a may acquire control information, data, etc. from the outside and output the generated XR object. The input/output unit 740a may include a camera, a microphone, a user input unit, a display, a speaker and/or a haptic module. The sensor unit 740b may obtain an XR device state, surrounding environment information, user information, etc. The sensor unit 740b may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar. The power supply unit 740c may supply power to the XR device 700a and include a wired/wireless charging circuit, a battery, etc.

For example, the memory unit 730 of the XR device 700a may include information (e.g., data, etc.) necessary to generate an XR object (e.g., AR/VR/MR object). The input/output unit 740a may acquire an instruction for manipulating the XR device 700a from a user, and the control unit 720 may drive the XR device 700a according to the driving instruction of the user. For example, when the user wants to watch a movie, news, etc. through the XR device 700a, the control unit 720 may transmit content request information to another device (e.g., a hand-held device 700b) or a media server through the communication unit 730. The communication unit 730 may download/stream content such as a movie or news from another device (e.g., the hand-held device 700b) or the media server to the memory unit 730. The control unit 720 may control and/or perform procedures such as video/image acquisition, (video/image) encoding, metadata generation/processing, etc. with respect to content, and generate/output an XR object based on information on a surrounding space or a real object acquired through the input/output unit 740a or the sensor unit 740b.

In addition, the XR device 700a may be wirelessly connected with the hand-held device 700b through the communication unit 710, and operation of the XR device 700a may be controlled by the hand-held device 700b. For example, the hand-held device 700b may operate as a controller for the XR device 700a. To this end, the XR device 700a may acquire three-dimensional position information of the hand-held device 700b and then generate and output an XR object corresponding to the hand-held device 700b.

FIG. 8 is a view showing an example of a robot applicable to the present disclosure. For example, the robot may be classified into industrial, medical, household, military, etc. according to the purpose or field of use. At this time, referring to FIG. 8, the robot 800 may include a communication unit (transceiver) 810, a control unit (controller) 820, a memory unit (memory) 830, an input/output unit 840a, sensor unit 840b and a driving unit 840c. Here, blocks 810 to 830/840a to 840c may correspond to the blocks 310 to 330/340 of FIG. 3, respectively.

The communication unit 810 may transmit and receive signals (e.g., driving information, control signals, etc.) to and from external devices such as another wireless device, another robot or a control server. The control unit 820 may control the components of the robot 800 to perform various operations. The memory unit 830 may store data/parameters/programs/code/instructions supporting various functions of the robot 800. The input/output unit 840a may acquire information from the outside of the robot 800 and output information to the outside of the robot 800. The input/output unit 840a may include a camera, a microphone, a user input unit, a display, a speaker and/or a haptic module.

The sensor unit 840b may obtain internal information, surrounding environment information, user information, etc. of the robot 800. The sensor unit 840b may include a proximity sensor, an illumination sensor, an acceleration sensor, a magnetic sensor, a gyro sensor, an inertia sensor, an infrared (IR) sensor, a finger scan sensor, an ultrasonic sensor, an optical sensor, a microphone and/or a radar.

The driving unit 840c may perform various physical operations such as movement of robot joints. In addition, the driving unit 840c may cause the robot 800 to run on the ground or fly in the air. The driving unit 840c may include an actuator, a motor, wheels, a brake, a propeller, etc.

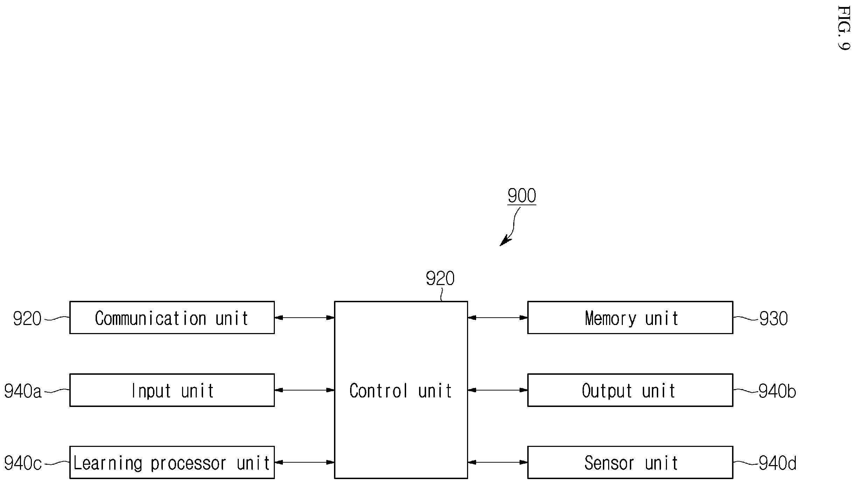

FIG. 9 is a view showing an example of artificial intelligence (AI) device applicable to the present disclosure. For example, the AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like.

Referring to FIG. 9, the AI device 900 may include a communication unit (transceiver) 910, a control unit (controller) 920, a memory unit (memory) 930, an input/output unit 940a/940b, a leaning processor unit (learning processor) 940c and a sensor unit 940d. The blocks 910 to 930/940a to 940d may correspond to the blocks 310 to 330/340 of FIG. 3, respectively.

The communication unit 910 may transmit and receive wired/wireless signals (e.g., sensor information, user input, learning models, control signals, etc.) to and from external devices such as another AI device (e.g., FIG. 1, 100x, 120 or 140) or the AI server (FIG. 1, 140) using wired/wireless communication technology. To this end, the communication unit 910 may transmit information in the memory unit 930 to an external device or transfer a signal received from the external device to the memory unit 930.

The control unit 920 may determine at least one executable operation of the AI device 900 based on information determined or generated using a data analysis algorithm or a machine learning algorithm. In addition, the control unit 920 may control the components of the AI device 900 to perform the determined operation. For example, the control unit 920 may request, search for, receive or utilize the data of the learning processor unit 940c or the memory unit 930, and control the components of the AI device 900 to perform predicted operation or operation, which is determined to be desirable, of at least one executable operation. In addition, the control unit 920 may collect history information including operation of the AI device 900 or user's feedback on the operation and store the history information in the memory unit 930 or the learning processor unit 940c or transmit the history information to the AI server (FIG. 1, 140). The collected history information may be used to update a learning model.

The memory unit 930 may store data supporting various functions of the AI device 900. For example, the memory unit 930 may store data obtained from the input unit 940a, data obtained from the communication unit 910, output data of the learning processor unit 940c, and data obtained from the sensing unit 940. In addition, the memory unit 930 may store control information and/or software code necessary to operate/execute the control unit 920.

The input unit 940a may acquire various types of data from the outside of the AI device 900. For example, the input unit 940a may acquire learning data for model learning, input data, to which the learning model will be applied, etc. The input unit 940a may include a camera, a microphone and/or a user input unit. The output unit 940b may generate video, audio or tactile output. The output unit 940b may include a display, a speaker and/or a haptic module. The sensing unit 940 may obtain at least one of internal information of the AI device 900, the surrounding environment information of the AI device 900 and user information using various sensors. The sensing unit 940 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar.

The learning processor unit 940c may train a model composed of an artificial neural network using training data. The learning processor unit 940c may perform AI processing along with the learning processor unit of the AI server (FIG. 1, 140). The learning processor unit 940c may process information received from an external device through the communication unit 910 and/or information stored in the memory unit 930. In addition, the output value of the learning processor unit 940c may be transmitted to the external device through the communication unit 910 and/or stored in the memory unit 930.

Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

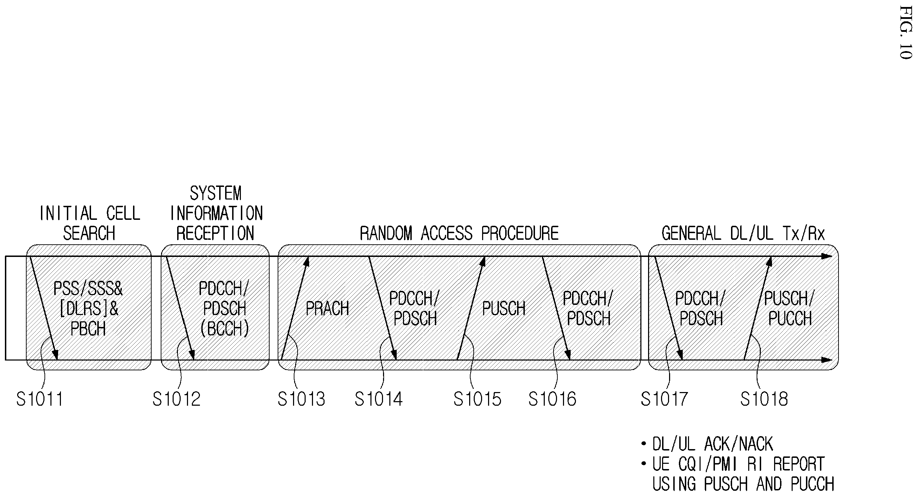

FIG. 10 is a view showing physical channels applicable to the present disclosure and a signal transmission method using the same.

The UE which is turned on again in a state of being turned off or has newly entered a cell performs initial cell search operation in step S1011 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S 1012, thereby acquiring more detailed system information.

Thereafter, the UE may perform a random access procedure such as steps S1013 to S1016 in order to complete access to the base station. To this end, the UE may transmit a preamble through a physical random access channel (PRACH) (S1013) and receive a random access response (RAR) to the preamble through a physical downlink control channel and a physical downlink shared channel corresponding thereto (S1014). The UE may transmit a physical uplink shared channel (PUSCH) using scheduling information in the RAR (S1015) and perform a contention resolution procedure such as reception of a physical downlink control channel signal and a physical downlink shared channel signal corresponding thereto (S 1016).

The UE, which has performed the above-described procedures, may perform reception of a physical downlink control channel signal and/or a physical downlink shared channel signal (S1017) and transmission of a physical uplink shared channel (PUSCH) signal and/or a physical uplink control channel (PUCCH) signal (S1018) as general uplink/downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

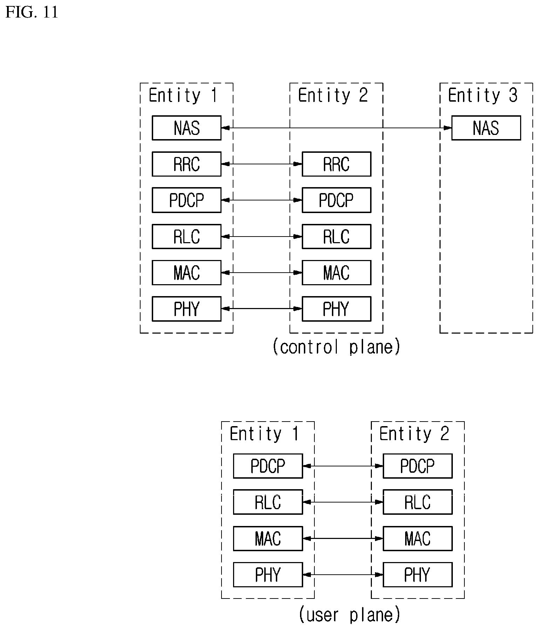

FIG. 11 is a view showing the structure of a control plane and a user plane of a radio interface protocol applicable to the present disclosure.

Referring to FIG. 11, Entity 1 may be a user equipment (UE). At this time, the UE may be at least one of a wireless device, a hand-held device, a vehicle, a mobility, an XR device, a robot or an AI device, to which the present disclosure is applicable in FIGS. 1 to 9. In addition, the UE refers to a device, to which the present disclosure is applicable, and is not limited to a specific apparatus or device.

Entity 2 may be a base station. At this time, the base station may be at least one of an eNB, a gNB or an ng-eNB. In addition, the base station may refer to a device for transmitting a downlink signal to a UE and is not limited to a specific apparatus or device. That is, the base station may be implemented in various forms or types and is not limited to a specific form.

Entity 3 may be a device for performing a network apparatus or a network function. At this time, the network apparatus may be a core network node (e.g., mobility management entity (MME) for managing mobility, an access and mobility management function (AMF), etc. In addition, the network function may mean a function implemented in order to perform a network function. Entity 3 may be a device, to which a function is applied. That is, Entity 3 may refer to a function or device for performing a network function and is not limited to a specific device.

A control plane refers to a path used for transmission of control messages, which are used by the UE and the network to manage a call. A user plane refers to a path in which data generated in an application layer, e.g., voice data or Internet packet data, is transmitted. At this time, a physical layer which is a first layer provides an information transfer service to a higher layer using a physical channel. The physical layer is connected to a media access control (MAC) layer of a higher layer via a transmission channel. At this time, data is transmitted between the MAC layer and the physical layer via the transmission channel. Data is also transmitted between a physical layer of a transmitter and a physical layer of a receiver via a physical channel. The physical channel uses time and frequency as radio resources.

The MAC layer which is a second layer provides a service to a radio link control (RLC) layer of a higher layer via a logical channel. The RLC layer of the second layer supports reliable data transmission. The function of the RLC layer may be implemented by a functional block within the MAC layer. A packet data convergence protocol (PDCP) layer which is the second layer performs a header compression function to reduce unnecessary control information for efficient transmission of an Internet protocol (IP) packet such as an IPv4 or IPv6 packet in a radio interface having relatively narrow bandwidth. A radio resource control (RRC) layer located at the bottommost portion of a third layer is defined only in the control plane. The RRC layer serves to control logical channels, transmission channels, and physical channels in relation to configuration, re-configuration, and release of radio bearers. A radio bearer (RB) refers to a service provided by the second layer to transmit data between the UE and the network. To this end, the RRC layer of the UE and the RRC layer of the network exchange RRC messages. A non-access stratum (NAS) layer located at a higher level of the RRC layer performs functions such as session management and mobility management. One cell configuring a base station may be set to one of various bandwidths to provide a downlink or uplink transmission service to several UEs. Different cells may be set to provide different bandwidths. Downlink transmission channels for transmitting data from a network to a UE may include a broadcast channel (BCH) for transmitting system information, a paging channel (PCH) for transmitting paging messages, and a DL shared channel (SCH) for transmitting user traffic or control messages.

Traffic or control messages of a DL multicast or broadcast service may be transmitted through the DL SCH or may be transmitted through an additional DL multicast channel (MCH). Meanwhile, UL transmission channels for data transmission from the UE to the network include a random access channel (RACH) for transmitting initial control messages and a UL SCH for transmitting user traffic or control messages. Logical channels, which are located at a higher level of the transmission channels and are mapped to the transmission channels, include a broadcast control channel (BCCH), a paging control channel (PCCH), a common control channel (CCCH), a multicast control channel (MCCH), and a multicast traffic channel (MTCH).

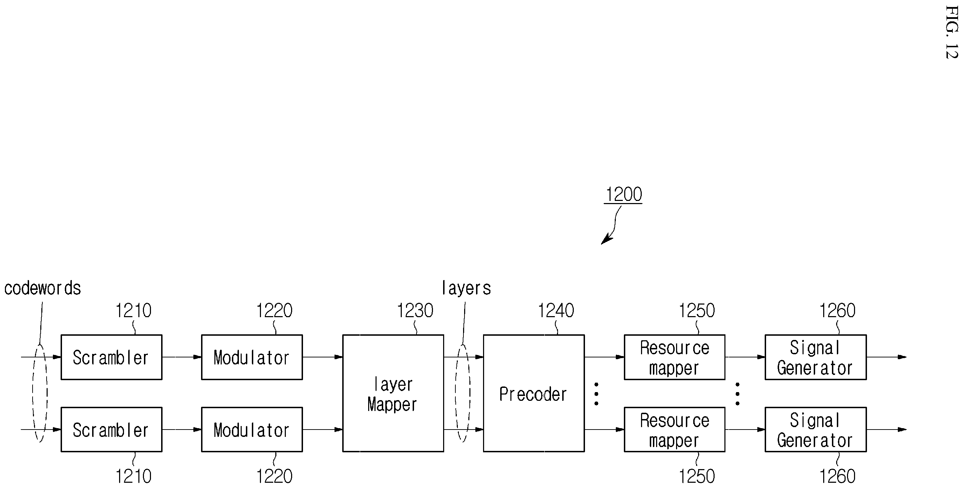

FIG. 12 is a view showing a method of processing a transmitted signal applicable to the present disclosure. For example, the transmitted signal may be processed by a signal processing circuit. At this time, a signal processing circuit 1200 may include a scrambler 1210, a modulator 1220, a layer mapper 1230, a precoder 1240, a resource mapper 1250, and a signal generator 1260. At this time, for example, the operation/function of FIG. 12 may be performed by the processors 202a and 202b and/or the transceiver 206a and 206b of FIG. 2. In addition, for example, the hardware element of FIG. 12 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 1210 to 1250 may be implemented in the processors 202a and 202b of FIG. 2 and a block 1260 may be implemented in the transceivers 206a and 206b of FIG. 2, without being limited to the above-described embodiments.

A codeword may be converted into a radio signal through the signal processing circuit 1200 of FIG. 12. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 10. Specifically, the codeword may be converted into a bit sequence scrambled by the scrambler 1210. The scramble sequence used for scramble is generated based in an initial value and the initial value may include ID information of a wireless device, etc. The scrambled bit sequence may be modulated into a modulated symbol sequence by the modulator 1220. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 1230. Modulation symbols of each transport layer may be mapped to corresponding antenna port(s) by the precoder 1240 (precoding). The output z of the precoder 1240 may be obtained by multiplying the output y of the layer mapper 1230 by an N*M precoding matrix W. Here, N may be the number of antenna ports and M may be the number of transport layers. Here, the precoder 1240 may perform precoding after transform precoding (e.g., discrete Fourier transform (DFT)) for complex modulation symbols. In addition, the precoder 1240 may perform precoding without performing transform precoding.

The resource mapper 1250 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 1260 may generate a radio signal from the mapped modulation symbols, and the generated radio signal may be transmitted to another device through each antenna. To this end, the signal generator 1260 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 1210 to 1260 of FIG. 12. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

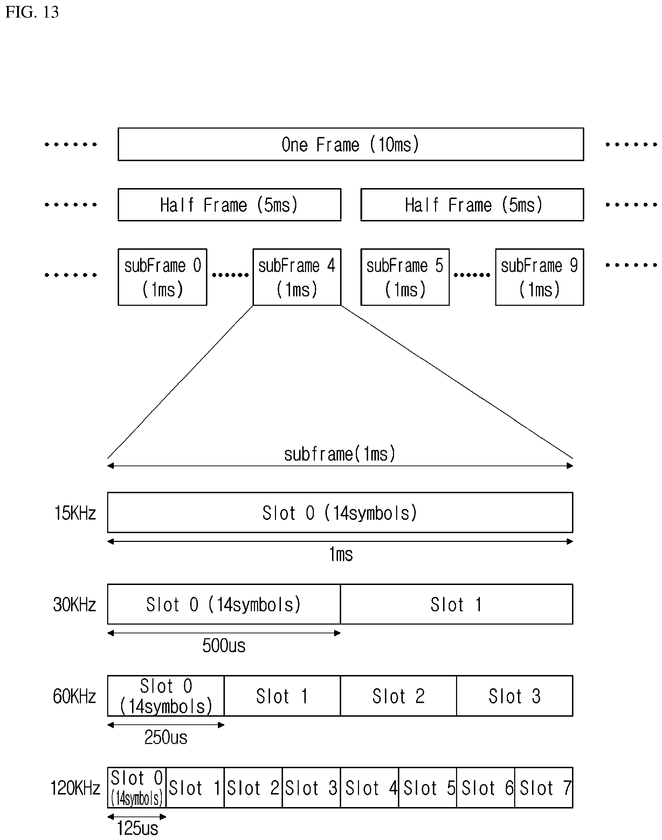

FIG. 13 is a view showing the structure of a radio frame applicable to the present disclosure.

UL and DL transmission based on an NR system may be based on the frame shown in FIG. 13. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

Table 1

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Table 2

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In Tables 1 and 2 above, Nslotsymb may indicate the number of symbols in a slot, Nframe,$\mu$slot may indicate the number of slots in a frame, and Nsubframe,$\mu$slot may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

Table 3

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

Table 4

| Per device peak data rate | 1 Tbps |
|---|---|
| E2E latency | 1 ms |
| Maximum spectral efficiency | 100bps/Hz |
| Mobility support | Up to 1000km/hr |

(continued)

| Satellite integration | Fully |
|---|---|
| AI | Fully |
| Autonomous vehicle | Fully |
| XR | Fully |
| Haptic Communication | Fully |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

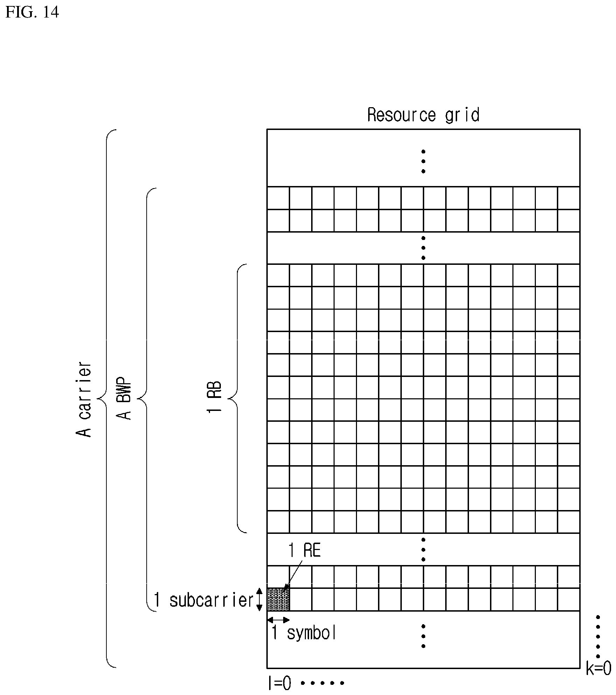

FIG. 14 is a view showing a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

6G communication system

At this time, the 6G system may have key factors such as enhanced mobile broadband (eMBB), ultra-reliable low latency communications (URLLC), massive machine type communications (mMTC 24), AI integrated communication, tactile internet, high throughput, high network capacity, high energy efficiency, low backhaul and access network congestion, and enhanced data security.

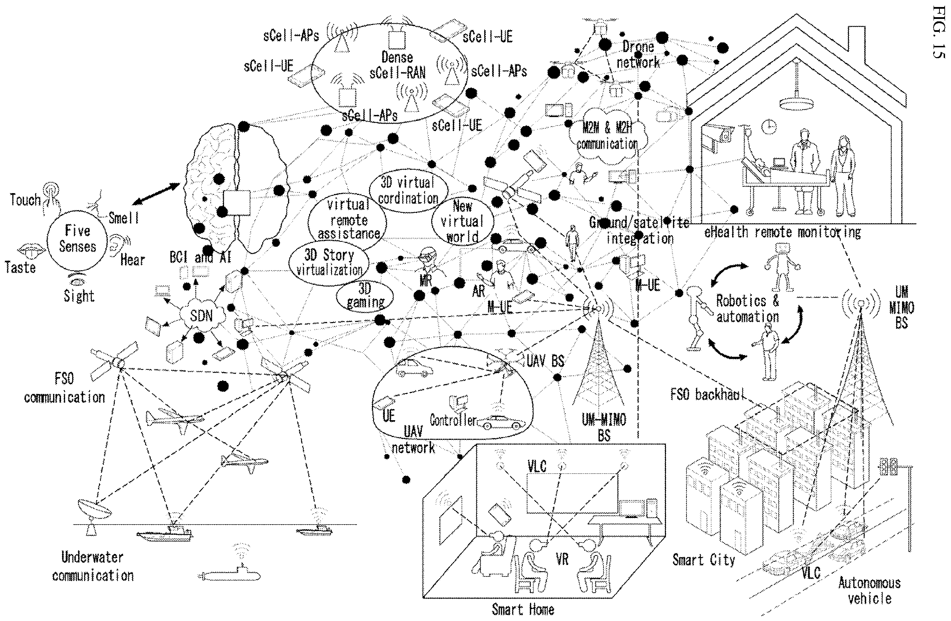

FIG. 15 is a view showing an example of a communication structure providable in a 6G system applicable to the present disclosure.

Referring to FIG. 15, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.

- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

Core implementation technology of 6G system

- Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to build a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

Terahertz (THz) communication

THz communication is applicable to the 6G system. For example, a data rate may increase by increasing bandwidth. This may be performed by using sub-THz communication with wide bandwidth and applying advanced massive MIMO technology.

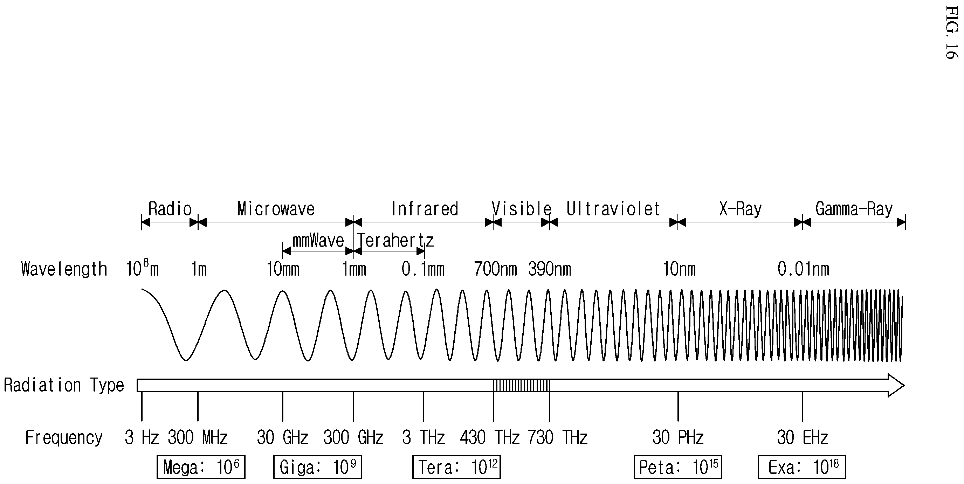

FIG. 16 is a view showing an electromagnetic spectrum applicable to the present disclosure. For example, referring to FIG. 16, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Optical wireless technology

Optical wireless communication (OWC) technology is planned for 6G communication in addition to RF based communication for all possible device-to-access networks. This network is connected to a network-to-backhaul/fronthaul network connection. OWC technology has already been used since 4G communication systems but will be more widely used to satisfy the requirements of the 6G communication system. OWC technologies such as light fidelity/visible light communication, optical camera communication and free space optical (FSO) communication based on wide band are well-known technologies. Communication based on optical wireless technology may provide a very high data rate, low latency and safe communication. Light detection and ranging (LiDAR) may also be used for ultra high resolution 3D mapping in 6G communication based on wide band.

FSO backhaul network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands.

FSO also supports cellular base station connections.

Massive MIMO technology

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Blockchain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

3D networking

The 6G system integrates terrestrial and public networks to support vertical expansion of user communication. A 3D BS will be provided through low-orbit satellites and UAVs. Adding new dimensions in terms of altitude and related degrees of freedom makes 3D connections significantly different from existing 2D networks.

Quantum communication

In the context of the 6G network, unsupervised reinforcement learning of the network is promising. The supervised learning method cannot label the vast amount of data generated in 6G. Labeling is not required for unsupervised learning. Thus, this technique can be used to autonomously build a representation of a complex network. Combining reinforcement learning with unsupervised learning may enable the network to operate in a truly autonomous way.

Unmanned aerial vehicle

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Cell-free Communication

The tight integration of multiple frequencies and heterogeneous communication technologies is very important in the 6G system. As a result, a user can seamlessly move from network to network without having to make any manual configuration in the device. The best network is automatically selected from the available communication technologies. This will break the limitations of the cell concept in wireless communication. Currently, user movement from one cell to another cell causes too many handovers in a high-density network, and causes handover failure, handover delay, data loss and ping-pong effects. 6G cell-free communication will overcome all of them and provide better QoS. Cell-free communication will be achieved through multi-connectivity and multi-tier hybrid technologies and different heterogeneous radios in the device.

Wireless information and energy transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

Integration of sensing and communication

An autonomous wireless network is a function for continuously detecting a dynamically changing environment state and exchanging information between different nodes. In 6G, sensing will be tightly integrated with communication to support autonomous systems.

Integration of access backhaul network

In 6G, the density of access networks will be enormous. Each access network is connected by optical fiber and backhaul connection such as FSO network. To cope with a very large number of access networks, there will be a tight integration between the access and backhaul networks.

Hologram beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram beamforming (HBF) is a new beamforming method that differs significantly from MIMO systems because this uses a software-defined antenna. HBF will be a very effective approach for efficient and flexible transmission and reception of signals in multi-antenna communication devices in 6G.

Big data analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

Large intelligent surface (LIS)

In the case of the THz band signal, since the straightness is strong, there may be many shaded areas due to obstacles. By installing the LIS near these shaded areas, LIS technology that expands a communication area, enhances communication stability, and enables additional optional services becomes important. The LIS is an artificial surface made of electromagnetic materials, and can change propagation of incoming and outgoing radio waves. The LIS can be viewed as an extension of massive MIMO, but differs from the massive MIMO in array structures and operating mechanisms. In addition, the LIS has an advantage such as low power consumption, because this operates as a reconfigurable reflector with passive elements, that is, signals are only passively reflected without using active RF chains. In addition, since each of the passive reflectors of the LIS must independently adjust the phase shift of an incident signal, this may be advantageous for wireless communication channels. By properly adjusting the phase shift through an LIS controller, the reflected signal can be collected at a target receiver to boost the received signal power.

THz wireless communication

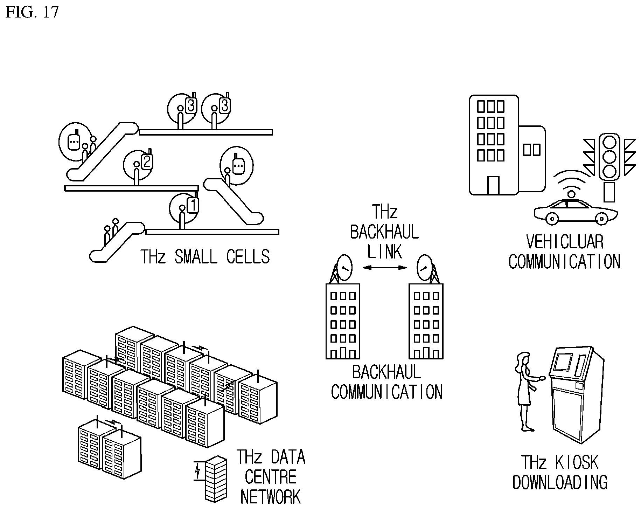

FIG. 17 is a view showing a THz communication method applicable to the present disclosure.
Referring to FIG. 17, THz wireless communication uses a THz wave having a frequency of approximately 0.1 to 10 THz (1 THz = 1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.
In addition, the photon energy of the THz wave is only a few meV and thus is harmless to the human body. A frequency band which will be used for THz wireless communication may be a D-band (110 GHz to 170 GHz) or a H-band (220 GHz to 325 GHz) band with low propagation loss due to molecular absorption in air. Standardization discussion on THz wireless communication is being discussed mainly in IEEE 802.15 THz working group (WG), in addition to 3GPP, and standard documents issued by a task group (TG) of IEEE 802.15 (e.g., TG3d, TG3e) specify and supplement the description of this disclosure. The THz wireless communication may be applied to wireless cognition, sensing, imaging, wireless communication, and THz navigation.

Specifically, referring to FIG. 17, a THz wireless communication scenario may be classified into a macro network, a micro network, and a nanoscale network. In the macro network, THz wireless communication may be applied to vehicle-to-vehicle (V2V) connection and backhaul/fronthaul connection. In the micro network, THz wireless communication may be applied to near-field communication such as indoor small cells, fixed point-to-point or multi-point connection such as wireless connection in a data center or kiosk downloading. Table 5 below shows an example of technology which may be used in the THz wave.

Table 5

| Transceivers Device | Available immature: UTC-PD, RTD and SBD |
|---|---|
| Modulation and coding | Low order modulation techniques (OOK, QPSK), LDPC, Reed Soloman, Hamming, Polar, Turbo |
| Antenna | Omni and Directional, phased array with low number of antenna elements |
| Bandwidth | 69GHz (or 23 GHz) at 300GHz |
| Channel models | Partially |
| Data rate | 100Gbps |
| Outdoor deployment | No |
| Free space loss | High |
| Coverage | Low |
| Radio Measurements | 300GHz indoor |
| Device size | Few micrometers |

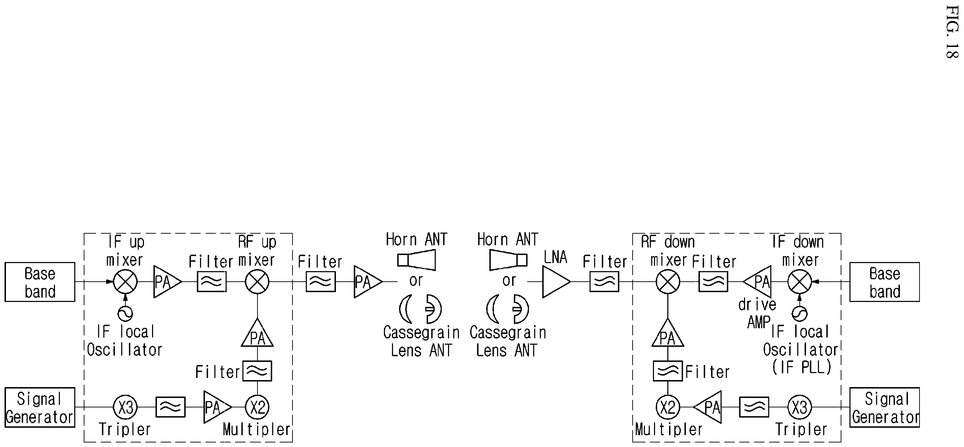

FIG. 18 is a view showing a THz wireless communication transceiver applicable to the present disclosure.

Referring to FIG. 18, THz wireless communication may be classified based on the method of generating and receiving THz. The THz generation method may be classified as an optical component or electronic component based technology.

At this time, the method of generating THz using an electronic component includes a method using a semiconductor component such as a resonance tunneling diode (RTD), a method using a local oscillator and a multiplier, a monolithic microwave integrated circuit (MMIC) method using a compound semiconductor high electron mobility transistor (HEMT) based integrated circuit, and a method using a Si-CMOS-based integrated circuit. In the case of FIG. 18, a multiplier (doubler, tripler, multiplier) is applied to increase the frequency, and radiation is performed by an antenna through a subharmonic mixer. Since the THz band forms a high frequency, a multiplier is essential. Here, the multiplier is a circuit having an output frequency which is N times an input frequency, and matches a desired harmonic frequency, and filters out all other frequencies. In addition, beamforming may be implemented by applying an array antenna or the like to the antenna of FIG. 18. In FIG. 18, IF represents an intermediate frequency, a tripler and a multiplier represents a multiplier, PA represents a power amplifier, and LNA represents a low noise amplifier, and PLL represents a phase-locked loop.

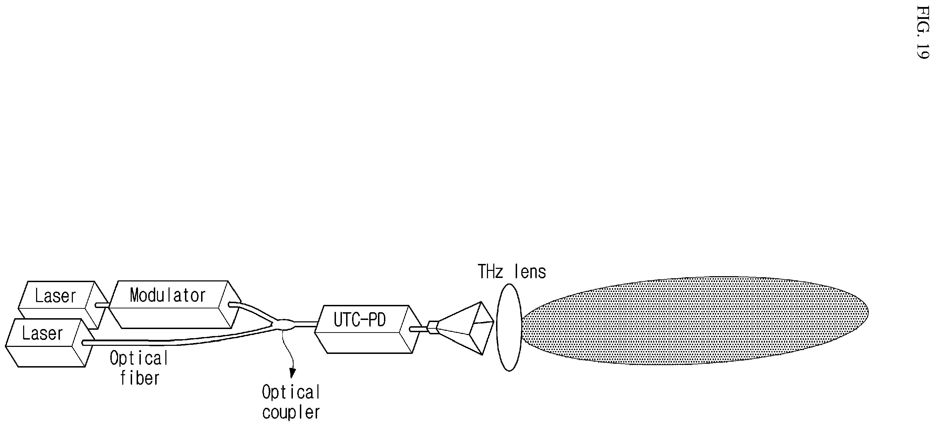

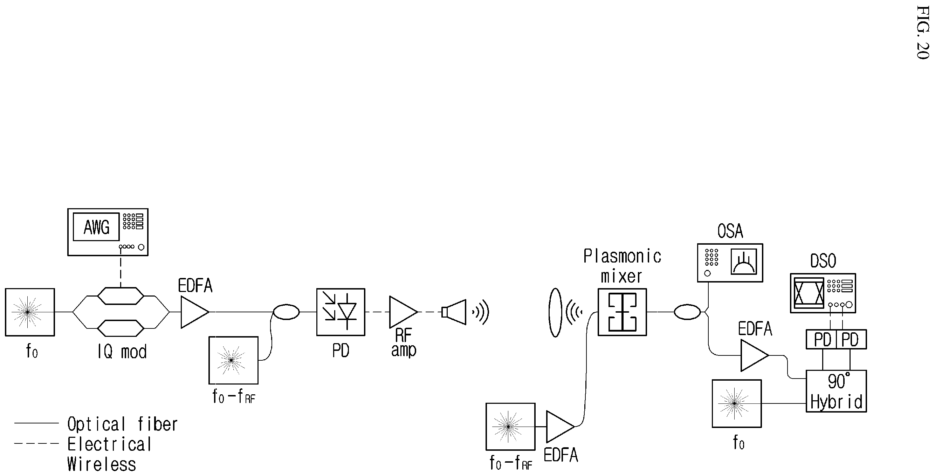

FIG. 19 is a view showing a THz signal generation method applicable to the present disclosure. FIG. 20 is a view showing a wireless communication transceiver applicable to the present disclosure.

Referring to FIGS. 19 and 20, the optical component-based THz wireless communication technology means a method of generating and modulating a THz signal using an optical component. The optical component-based THz signal generation technology refers to a technology that generates an ultrahigh-speed optical signal using a laser and an optical modulator, and converts it into a THz signal using an ultrahigh-speed photodetector. This technology is easy to increase the frequency compared to the technology using only the electronic component, can generate a high-power signal, and can obtain a flat response characteristic in a wide frequency band. In order to generate the THz signal based on the optical component, as shown in FIG. 19, a laser diode, a broadband optical modulator, and an ultrahigh-speed photodetector are required. In the case of FIG. 19, the light signals of two lasers having different wavelengths are combined to generate a THz signal corresponding to a wavelength difference between the lasers. In FIG. 19, an optical coupler refers to a semiconductor component that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 20, an erbium-doped fiber amplifier (EDFA) represents an optical fiber amplifier to which erbium is added, a photo detector (PD) represents a semiconductor component capable of converting an optical signal into an electrical signal, and OSA represents an optical sub assembly in which various optical communication functions (e.g., photoelectric conversion, electrophotic conversion, etc.) are modularized as one component, and DSO represents a digital storage oscilloscope.

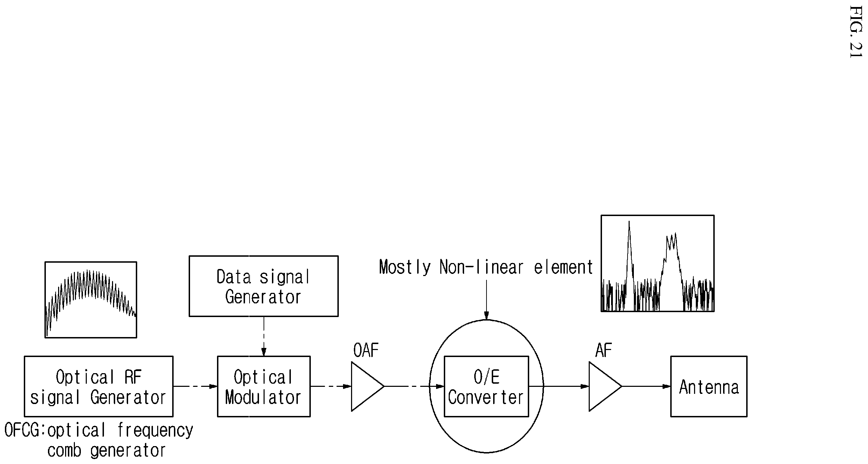

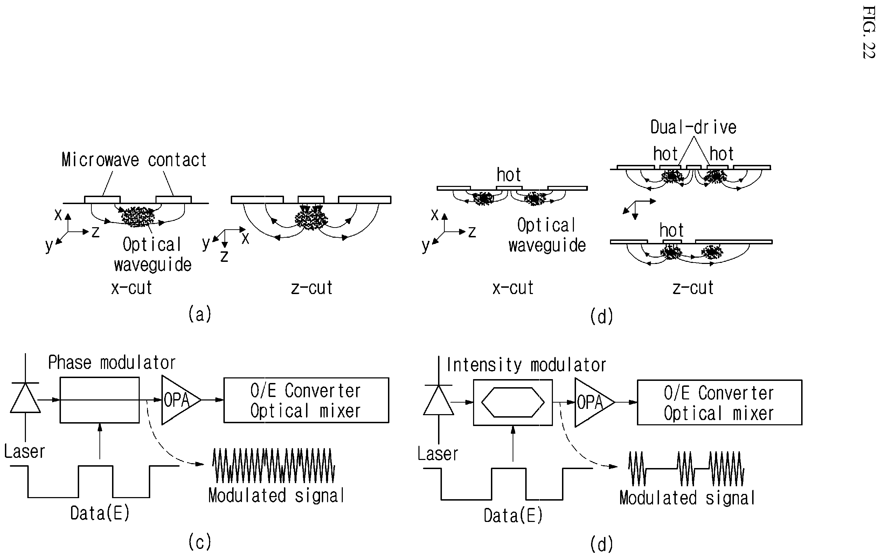

FIG. 21 is a view showing a transmitter structure applicable to the present disclosure. FIG. 22 is a view showing a modulator structure applicable to the present disclosure.

Referring to FIGS. 21 and 22, generally, the optical source of the laser may change the phase of a signal by passing through the optical wave guide. At this time, data is carried by changing electrical characteristics through microwave contact or the like. Thus, the optical modulator output is formed in the form of a modulated waveform. A photoelectric modulator (O/E converter) may generate THz pulses according to optical rectification operation by a nonlinear crystal, photoelectric conversion (O/E conversion) by a photoconductive antenna, and emission from a bunch of relativistic electrons. The terahertz pulse (THz pulse) generated in the above manner may have a length of a unit from femto second to pico second. The photoelectric converter (O/E converter) performs down conversion using non-linearity of the component.

Given THz spectrum usage, multiple contiguous GHz bands are likely to be used as fixed or mobile service usage for the terahertz system. According to the outdoor scenario criteria, available bandwidth may be classified based on oxygen attenuation $10^2$ dB/km in the spectrum of up to 1 THz. Accordingly, a framework in which the available bandwidth is composed of several band chunks may be considered. As an example of the framework, if the length of the terahertz pulse (THz pulse) for one carrier (carrier) is set to 50 ps, the bandwidth (BW) is about 20 GHz.

Effective down conversion from the infrared band to the terahertz band depends on how to utilize the nonlinearity of the O/E converter. That is, for down-conversion into a desired terahertz band (THz band), design of the photoelectric converter (O/E converter) having the most ideal non-linearity to move to the corresponding terahertz band (THz band) is required. If a photoelectric converter (O/E converter) which is not suitable for a target frequency band is used, there is a high possibility that an error occurs with respect to the amplitude and phase of the corresponding pulse.

In a single carrier system, a terahertz transmission/reception system may be implemented using one photoelectric converter. In a multi-carrier system, as many photoelectric converters as the number of carriers may be required, which may vary depending on the channel environment. Particularly, in the case of a multi-carrier system using multiple broadbands according to the plan related to the above-described spectrum usage, the phenomenon will be prominent. In this regard, a frame structure for the multi-carrier system can be considered. The down-frequency-converted signal based on the photoelectric converter may be transmitted in a specific resource region (e.g., a specific frame). The frequency domain of the specific resource region may include a plurality of chunks. Each chunk may be composed of at least one component carrier (CC).

In the following, specific embodiments of the present disclosure will be described based on the foregoing. As described above, a new communication system may operate based on a terahertz band. Here, as an example, when the communication system performs wireless communication in the terahertz band, the communication system may perform communication based on CoMP (Coordinated Multi-Point) scheme. Specifically, CoMP may refer to a method of performing communication through cooperation of neighboring cells. For example, the terminal may perform communication with other cells through cooperation with neighboring cells as well as a serving cell.

Here, the CoMP scheme may be largely divided into a Joint Processing (JP) scheme and a Coordinated Scheduling (CS) scheme. For example, the JP scheme may be a technique for performing cooperative MIMO (Multi Input Multi Output) simultaneously receiving data from a plurality of base stations. Also, the CS scheme may be a technique in which a neighboring base station adjusts scheduling so that interference does not occur. In addition, a coordinated beamforming (CB) scheme may be used as a CoMP scheme. In this case, the CB scheme may be a technique for minimizing interference by generating a null beam from a neighboring base station to a corresponding terminal. That is, the CoMP scheme is a method of avoiding an interference signal from a neighboring base station and a technique for replacing the interference signal with a desired signal and may be used to increase throughput.

Here, as an example, in the terahertz band, as described above, path loss may be large and phase noise may be large. Considering the above points, there is a need for a terminal and a base station to perform communication using a very sharp beam. Therefore, both the terminal and the base station may have to perform communication based on beamforming. Considering the above points, the terminal and the base station may need to perform beam control along with beamforming. This may mean that the number of beams to be operated by the terminal and the base station increases.

At this time, for example, when a blockage phenomenon or beam mismatching occurs based on an obstacle between the base station and the terminal, performance of a received signal as a signal transmitted between the base station and the terminal may rapidly deteriorate. If compensation is not performed for performance degraded by such a blockage phenomenon or beam mismatching, communication efficiency between the terminal and the base station may decrease. In addition, the above-described problem may become larger as a higher frequency is used.

Considering the above points, a new communication system using a terahertz band seeks to solve the above problems through communication based on a CoMP scheme, which will be described below.

For example, the existing CoMP scheme was used for the purpose of increasing throughput in consideration of cell edge terminals, but in the following, it may be used to stabilize a communication link in consideration of a blockage phenomenon in a terahertz band, but is not limited thereto.

In the following, a method of performing communication between a terminal and a base station based on a CoMP scheme in a terahertz band in consideration of the above situation will be described. In addition, as an example, in the following description, the terminal and the base station are mainly described for convenience of description, but the present disclosure is not limited thereto. For example, the same may be applied to the devices of FIGS. 4 to 9 or objects that transmit and receive data as TRPs (Transmission and Reception Points), and are not limited to the above-described embodiments.

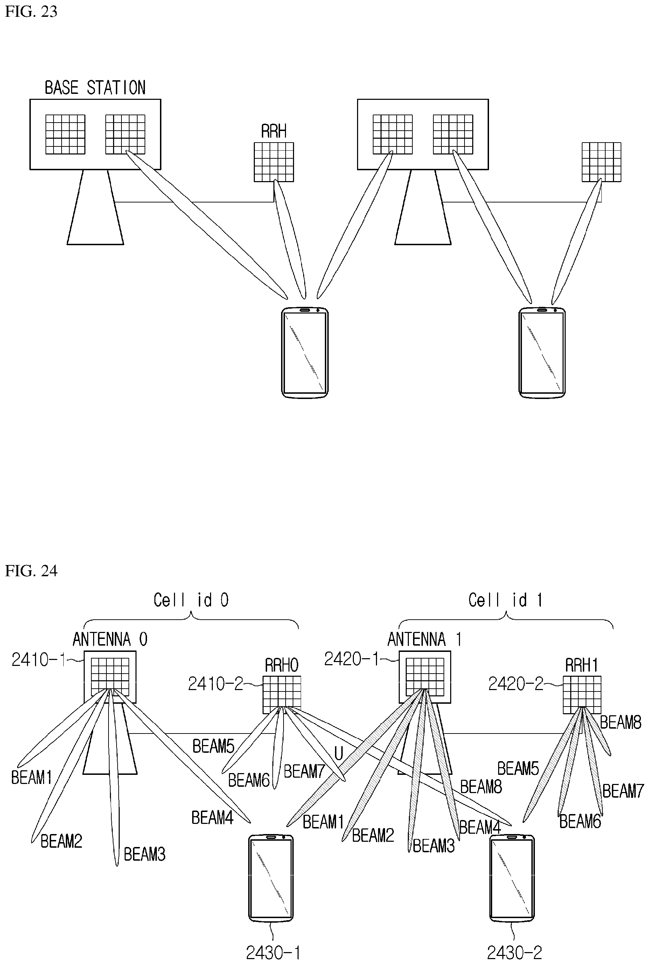

FIG. 23 is a diagram illustrating a method of performing communication based on a CoMP scheme in a terahertz band applicable to the present disclosure.

In the following, a method of using CoMP as a technique for coping with an unstable situation on a communication link due to a blockage phenomenon based on an obstacle in a terahertz band will be described. In addition, as an example, problems occurring when communication is performed based on the CoMP scheme in the terahertz band and methods for solving them will be described.

For example, a transmission object performing an existing CoMP operation may be a base station. However, in the following description, a transmission object performing a CoMP operation may include not only a base station, but also at least one of an access point (AP) or a remote radio head (RRH) connected to an arbitrary base station. Also, as an example, the 'transmission object' of the signal for the CoMP scheme may be at least one of an array antenna set generating a beam, a panel or a reflector. For example, a transmission/reception apparatus including at least one of an array antenna set generating a beam, a panel or a reflector may be a transmission object in the present disclosure, but is not limited thereto.

Here, as an example, the transmission/reception apparatus may include a plurality of array antennas. As a specific example, the above-described array antenna set may include all of a plurality of array antennas in the transmission/reception apparatus. The transmission/reception apparatus may generate a beam using all of the plurality of array antennas provided, and a set of array antennas related to beam generation may be the above-described array antenna set.

As another example, the transmission/reception apparatus includes a plurality of array antennas, but a beam is generated using at least one or more of the array antennas, and the remaining at least one or more array antennas may be used for other purposes. Here, as an example, the aforementioned array antenna set may refer to a set of array antennas used to generate a beam among a plurality of array antennas. That is, even if the transmission/reception apparatus includes a plurality of array antennas, an array antenna set may be set as a set of some array antennas, and is not limited to the above-described embodiment.

That is, the antenna array set may refer to a set of array antennas used to generate a beam among a plurality of array antennas implemented in the transmission/reception apparatus, but is not limited thereto.

Also, as an example, when a Central Unit (CU) and a Distributed Unit (DU) is configured as a RAN structure, it may be a transmission object for performing a CoMP operation. Also, as an example, a repeater or other device that transmits and receives signals may be a transmission object applied below. In the following description, the base station is mainly described for convenience of description, but as described above, it can be equally applied to various transmission objects, and is not limited to a specific transmission object.

As a specific example, referring to FIG. 23, each base station may consist of a main tower and one RRH. Here, the main tower may include two antennas. That is, the main tower may have two transmission objects and the RRH may have one transmission object. However, this is only one example for convenience of description, and is not limited to the above-described embodiment. For example, the main tower may include two or more antennas or may be configured with one or more RRHs, and is not limited to the above-described embodiment. Also, as an example, the concept of a cell applied in the past communication system is evolving into a UE-centric cell as the communication generation evolves.

For example, as described above, when the terahertz band is used as a new communication system, a UE-centric cell concept may be further required.

For example, in the case of using the terahertz band, base stations (or transmission objects) may be densely arranged in a narrow service area and cells may overlap to overcome a blockage phenomenon.

However, as described above, when a sharp beam is used in the terahertz band, intercell interference may be reduced. Accordingly, the CoMP transmission scheme may be used based on other purposes in a UE-centric cell.

For example, the CoMP transmission scheme may operate based on a base station (or RRH, or AP, hereinafter base station) set as a CoMP cooperating set. That is, base stations that directly or indirectly participate in transmission in consideration of a data service may be a CoMP cooperating set. Among them, a transmission object involved in actually transmitting and receiving data to and from a terminal may be referred to as a transmission and reception point (TRP).

In the following, an array antenna set included in an arbitrary base station or a set thereof may be defined as a TRP. Considering the above points, the antenna panel and the RRH may be utilized as a TRP, but are not limited thereto.

Here, as an example, TRPs may be determined based on at least one of a load condition of a base station, whether or not cooperative transmission of a signal is possible, or a channel condition, and may be changed every moment.

For example, the existing CoMP transmission scheme may be a joint processing scheme in which TRPs in a CoMP cooperating set are determined and data is simultaneously transmitted from the determined TRPs to the terminal. Also, as an example, the existing CoMP transmission scheme may be a scheme of increasing throughput in the form of CS and CB of interference avoidance.

However, in the following CoMP set configuration, metrics considering mobility such as RSSS (received signal strengths) and RSRP (received signal received power) may be considered.

Here, as an example, CSI measurement for JP transmission could be measured using CSI-RS in case of 3GPP. That is, the operation of the terminal for CoMP may be divided into a CoMP environment configuration and an actual data transmission/reception process. At this time, the CoMP environment configuration may be viewed as an operation of determining a CoMP set by the base station by measuring and reporting a signal strength measured from each base station, and an operation of measuring and reporting CSI for cooperative transmission.

On the other hand, the actual data transmission/reception process may be a process of actually receiving data from the configured CoMP environment. Here, as an example, in determining a CoMP cooperating set, information for matching a receive beam direction with a beam direction in a process of receiving an actual data service may be provided. Also, as an example, information for matching receive beam direction may be provided even in a process of measuring CSI.

However, in the terahertz band, it may be necessary to consider phase noise as well as a beam matching problem. For example, when using the terahertz band, the influence of phase noise may increase. Considering the above, when using the terahertz band, a subcarrier spacing may be widely used in consideration of the influence of phase noise. Also, for example, due to the characteristics of the terahertz channel and beamforming, a channel delay spread between the base station and the terminal may be shortened. Based on the above conditions, in an orthogonal frequency division multiplexing (OFDM) system, a period of symbols constituting CP (Cyclic Prefix) may be designed to be short. In addition, since a broadband service may be expected in the terahertz band, use of a high sampling rate corresponding thereto may be expected.

As an example, Table 6 below may show a sub carrier space (SCS), bandwidth, symbol duration, and sampling frequency applicable when a structure designed in the 5G standard is extended to terahertz. For example, when designing an OFDM system based on Table 6 below, a symbol duration in a terahertz band may be shorter than a symbol duration in a frequency band of an existing communication system. Also, the CP spacing may be shorter than the frequency band of the existing system in the terahertz band. For example, the CP spacing may be determined to be 144 samples. However, this is only one example and is not limited to the above-described embodiment.

[Table 6]

|  | mmWave | THz |
|---|---|---|
| Sub carrier space | 128KHz | 3.84MHz |
| Band Width | 400MHz (4096 FFT) | 6.3GHz (2048FFT) |
| Symbol duration | 8929ns (4384 sample) | 280ns (2192 sample) |
| Sampling frequency | 491MHz | 7.84GHz |

Here, as an example, as described above, as a case where the CP spacing is determined to be 144 samples, a case in which TRP A and TRP B perform communication with a terminal based on the CoMP scheme may be considered. In this case, when a difference between a distance between TRP A and the terminal and a distance between TRP B and the terminal is 1 m, a signal difference corresponding to 24 samples may occur. Therefore, when the distance difference described above is 6 m or more, the arrival time difference between the two signals may be greater than CP due to a time difference between two systems. Therefore, since the signal arrival time difference is greater than CP, Inter Symbol Interference (ISI) may occur as interference between signals. In the above situation, even if the terminal receives data from the TRP A and the TRP B based on the CoMP transmission scheme, transmission efficiency may be further reduced due to ISI.

Considering the foregoing, the terminal needs to report the information on the signal arrival difference between the base stations to the base station. Here, the corresponding base station may perform time alignment adjusting the time by the corresponding time based on the above-described information and provide a service to the terminal based on this.

Here, as an example, when the terminal reports a signal difference between base stations, the terminal may set a reference transmission point (TP). At this time, the terminal may report relative time difference information between the received signal of the reference TP and the received signal of another TP. That is, the terminal may set a reference TP for reporting signal difference information of the terminal. In this case, when the terminal reports the signal difference between the base stations, the reference TP may be set based on a combination of at least one of the information in Table 7 below.

[Table 7]

- Cell id
- beam index set
- beam index
- TRP set id

Here, the cell id may be ID information of a specific cell. In addition, a beam index set is grouping of beams provided by base stations, and may refer to a set of beams estimated to be received at the same time point upon reception.

For example, a beam index set may be composed of beams transmitted from a specific antenna panel, but is not limited thereto.

Also, as an example, a TRP set ID may refer to an ID of a set composed of one or more TRPs. Here, when a plurality of TRPs (e.g. antenna panels) exist in the same area, each TRP may be assigned an ID.

Here, as an example, the terminal may define $T_{ref}$ based on a frame time at which the corresponding signal is received from the reference TP. That is, the terminal may define $T_{ref}$ as the frame time received by the reference TP.

As another example, the terminal may define $T_{ref}$ based on a slot in which a corresponding signal is received from a reference TP. For example, in the existing communication system and the new communication system, time may be differentiated in units of slots based on a sub carrier spacing (SCS). Considering the foregoing, the terminal may define $T_{ref}$ based on the slot in which the corresponding signal is received from the reference TP, and is not limited to the above-described embodiment. As another example, in order to more precisely measure $T_{ref}$, the resolution of $T_{ref}$ may be set differently, and is not limited to the above-described embodiment. As another example, $T_{ref}$ may be set by further considering an offset value or other information, and is not limited to the above-described embodiment.

However, in the following, $T_{ref}$ will be described based on the frame time at which the corresponding signal is received from the reference TP.

As a specific example, when the reference TP is designated using "(beam index set $\in$ {beam 8, beam 9, ..., beam 16})" as a beam index set together with cell id (No. 10) may be considered. In this case, when the terminal receives beam indices 8 to 16 in cell ID 10, the terminal may define $T_{ref}$ based on the frame time at which the corresponding signal is received. That is, the terminal may define $T_{ref}$ as the frame time received by the reference TP.

At this time, the terminal may measure a reception time difference $\Delta t$ received from a receive beam different from $T_{ref}$ by the reference TP. After that, the terminal may feed the receive beam information back to the base station.

For example, the terminal may feed the receive beam information back to the base station using at least one of a beam index, a cell ID, a TRP set ID or a reception time difference $\Delta t$. Here, as an example, when the terminal provides $\Delta t$ information to the base station, $\Delta t$ information may be provided in consideration of at least one of a preset value or a preset table index at some spacings, which will be described later.

FIG. 24 is a diagram illustrating a method of performing communication based on a CoMP scheme in a terahertz band applicable to the present disclosure.

Referring to FIG. 24, a case in which a terminal reports receive beam information may be considered. For example, a base station composed of one main tower and one RRH may have "cell id 0" as a cell ID. Here, one main tower may be provided with one antenna 2410-1, and the RRH may also be provided with one transmission object 2410-2. Here, the main tower antenna 2410-1 may transmit beams having beam indices 1 to 4. That is, beams 1 to 4 may be a set of beams estimated to be received at the same time point upon reception. Also, the RRH 2410-2 may transmit beam indices 5 through 8. Beams 5 to 8 may also be a set of beams estimated to be received at the same time point upon reception.

In addition, another base station composed of one main tower and one RRH may have "cell id 1" as a cell ID. Here, one main tower may be provided with one antenna 2420-1, and the RRH may also be provided with one transmission object 2410-2. Here, the main tower antenna 2420-1 may transmit beams having beam indices 1 to 4. Also, the RRH 2420-2 may transmit beam indices 5 to 8. However, this is only one example and is not limited to the above-described embodiment.

That is, in FIG. 24, base stations having "cell id 0" and "cell id 1" each have one antenna and one RRH and may provide a unique beam, but this is merely one example, and the same may be applied to the other situations.

Here, Terminal 1 (UE 1) 2430-1 and Terminal 2 (UE 20) 2430-2 may each operate based on the CoMP transmission scheme. For example, in UE1 2430-1, beam 4 with "cell id 0" and beam 1 with "cell id 1" may be measured. That is, in UE1 2430-1, TRPs may be Antenna 0 2410-1 with "cell id 0" and Antenna 1 2420-1 with "cell id 1". At this time, as an example, UE1 2430-1 may set the reference TP to Antenna 0 2410-1.

For example, the terminal may determine a reference TP by comparing signal strength (e.g. RSRP) values of measured beams. For example, the terminal may determine the reference TP using a beam having the highest signal strength, and is not limited to the above-described embodiment.

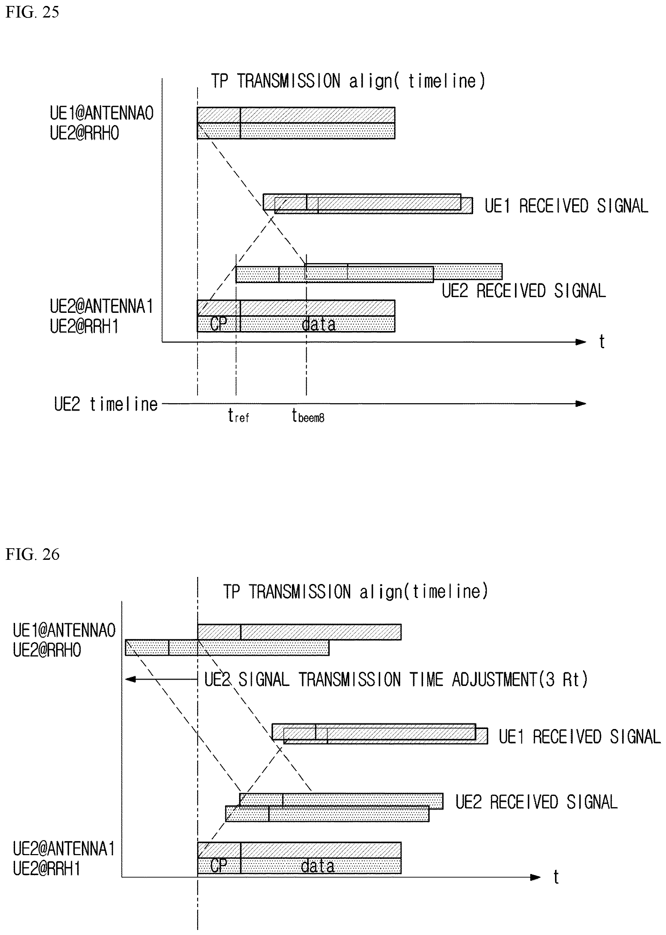

In FIG. 24, UE1 2430-1 may set Antenna 0 2410-1 as a reference TP. Also, for example, in UE2 2430-2, beam 8 with "cell id 0" and beam 5 with "cell id 1" may be measured. That is, in UE2 2430-2, TRPs may be RRH 0 2410-2 with "cell id 0" and RRH 1 2420-2 with "cell id 1". At this time, as an example, UE2 2430-2 may set the reference TP to RRH 1 2410-2. As an example, FIG. 25 is a diagram illustrating a method of performing time alignment based on a CoMP scheme in a terahertz band applicable to the present disclosure.

Referring to FIG. 25, each of the TPs 2410-1, 2410-2, 2420-1 and 2420-2 may transmit signals to each of terminals 2430-1 and 2430-2 based on a synchronized timeline (hereinafter referred to as timeline). Here, FIG. 25 may show a time relationship between signals received from UE1 2430-1 and UE2 2430-2. For example, in the case of UE1 2430-1, it can be seen that the times of signals received by UE1 2430-1 have similarly a small time difference. For example, a time difference between signals received by UE1 2430-1 may be smaller than CP.

On the other hand, in the case of UE2 2430-2, a time difference between signals received by UE2 2430-2 may be significant. For example, a time difference between signals received by UE2 2430-2 may be greater than CP. That is, in UE2 2430-2, the signal transmitted from RRH0 2410-2 may arrive later than the signal transmitted from RRH1 2420-2 by a CP spacing or longer. Therefore, ISI may occur between signals received by UE2 2430-2.

Therefore, UE2 2430-2 needs to perform time alignment. For example, in the UE2 timeline, $t_{ref}$ may mean a reception time from a reference TP by propagation delay. Also, $t_{beem8}$ may mean a reception time due to a propagation delay of beam 8 transmitted from RRH0 2410-2.

At this time, as an example, the $\triangle t$ value may be standardized to a specific value in order to be reported to the base station, which may be shown in Equation 1 below.

[Equation 1]

$$\triangle t \text{ information} = f\left(\triangle t, Rt\right)$$

where, Rt is a value predefined in a base station or system and may mean resolution of a time spacing. Also, a function f may be a function for obtaining $\triangle t$ information. For example, the function f may be defined as "f(a, b)=floor(a/b)" or "f(a, b)=ceil(a/b)". For example, floor(x) may mean a maximum integer value not exceeding x, and ceil(x) may mean a minimum integer value greater than x. However, the function f is not limited to the above equation, and may be defined as other functions.

For example, the terminal may use a predefined table for reporting of $\triangle t$ information. At this time, the terminal and the base station may share information on a predefined table in advance. For example, table information predefined in advance may be provided to terminals through a broadcasting channel. Also, as an example, the base station may provide predefined table information to terminals in an RRC connection process or a reconfiguration process, and is not limited to the above-described embodiment.

Here, as an example, the table may be as shown in Table 8 below, but this is only one example and is not limited to the following embodiment.

[Table 8]

| index | $\triangle t$ |
|-------|---------------|
| 0 | $- T_{CP}/2$ |
| 1 | 0 |
| 2 | $T_{CP}/2$ |
| 3 | $T_{CP}$ |

Here, as an example, referring to FIGS. 24 and 25, a case where $Rt = T_{CP}/2$ and $\Delta t = t_{ref} - t_{beem8} = 1.6\ T_{CP}$ may be considered in UE2 2430-2. However, this is only one example and may be set differently. When "floor($\Delta t/Rt$)" is used as Equation 1 described above based on Table 8 above, information fed back from UE2 2430-2 to the base station may be calculated as 1.5 Rt. Here, $T_{CP}$ may mean a CP time period. Also, $t_{beem8}$ may be a time point at which beam 8 of cell 0 is received. Accordingly, the time-related information reported by UE2 2430-2 may be information on 1.5Rt and information on RRH 0 2410-2 with "cell id 0" or beam 8.

Here, as an example, UE2 2430-2 may report the above-described time-related information and beam-related information to at least one of a cell (or TRP) for a reference TP and a target cell (or TRP) requiring time adjustment.

For example, the base station may operate a plurality of transmission signal timelines in units of predefined time in order to apply time adjustment requests of various terminals. In addition, all transmission objects belonging to the base station may be operated based on different timelines. As a more specific example, the above-described information on the timeline may be operated by utilizing Rt information shared with the terminal as described above. For example, the base station may operate four timelines -Rt, 0, Rt, and 2Rt. Through this, the base station may provide a signal to the corresponding terminal based on the information requested by the terminal.

Conversely, when Rt is determined in Equation 1 described above, Rt may be determined in consideration of timeline information operated by the base station, and is not limited to the above-described embodiment.

Here, time operation of -Rt may mean operation of a time earlier than the reference timeline by Rt. For example, the base station having "cell id 0" in FIG. 24 described above may operate two timelines. For example, Antenna 0 2410-1 may be set to 0Rt for UE1 2430-1. On the other hand, RRH0 2410-2 may advance the time by 3Rt for UE2 2430-2 and transmit a signal, and may be as shown in FIG. 26. Through this, the time difference between signals received by UE2 2430-2 may not exceed the CP spacing, and communication may be performed without generating ISI.

As another example, as described above, the timelines of all signals (or physical channels) transmitted using a corresponding beam (or corresponding TRP) may be adjusted. That is, timeline adjustments may also affect other signal transmissions. Here, as an example, when a tracking reference signal (e.g., PTRS) is also adjusted based on timeline adjustment, a problem may occur in synchronization when the terminal transmits a signal based on the CoMP transmission scheme. That is, the terminal also needs to check information about the timeline adjusted by the base station. Accordingly, the base station may transmit information about the timeline being adjusted to the terminal.

For example, based on the above-described embodiment, when the base station advances the time by 3Rt and transmits a signal, the base station may transmit related information to the corresponding terminal. Also, as an example, the base station may transmit information on Table 9 below to the terminal together with time information. That is, the base station may transmit not only time information but also information related to time adjustment to the terminal.

[Table 9]

| |
|---|
| Signal transmission location and method related information (e.g., beam information, transmission object (panel, RRH, etc.), cell information, etc.) |
| Types of signals to be adjusted (e.g. PDSCH, CSI_RS, etc.) |
| Amount of time to be adjusted |

Here, when the terminal receives the above-described information, the terminal may utilize the received information to define a time reference based on a reference timeline.

Specifically, as described above, when the timeline of RRH0 2410-2 having "cell id 0" is adjusted by -3Rt according to the request of UE2, the base station having "cell id 0" may forward related information to terminals. For example, information received by the terminal based on the above-described Table 9 may receive information about RRH 0 of "cell id 0" as signal transmission location related information. In addition, the terminal may receive information about a synchronization signal (e.g., PSS, SSS) and PDSCH as types of signals to be adjusted. In addition, the terminal may receive -3Rt information as information about the amount of time to be adjusted.

Here, when the terminals receive a beam related to RRH0, the terminals may estimate $\Delta t$ as a reference timeline by using the corresponding information. That is, when frame synchronization is obtained with a synchronization signal received from RRH0 having "cell id 0", terminals estimate a reference timeline by considering the time as much as 3Rt from the measured time. In addition, as an example, the terminal may determine a signal (e.g., PDCCH) irrelevant to PDSCH reception as a reference timeline and assume that transmission is performed based on this, and is not limited to the above-described embodiment.

For the foregoing, the base station may provide terminals with timeline related information of not only the RRH included in the base station but also neighboring cells and neighboring RRHs.

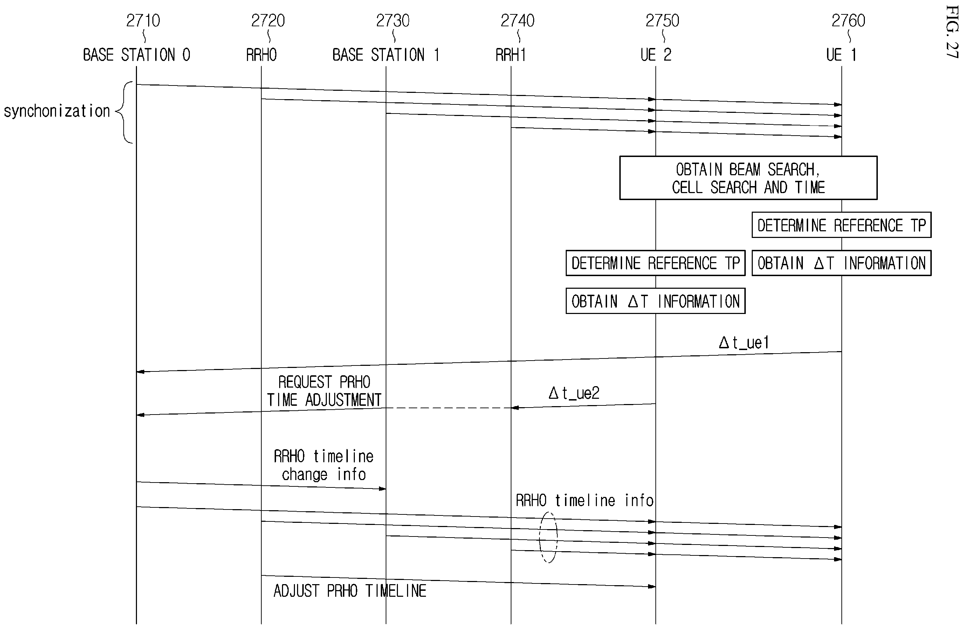

FIG. 27 is a diagram illustrating operations of a base station and a terminal based on a CoMP scheme in a terahertz band applicable to the present disclosure.

Referring to FIG. 27, base stations and terminals may operate based on the above.

More specifically, each of the TPs 2710, 2720, 2730, and 2740 may transmit a synchronization signal to the terminals 2750 and 2760. Here, as an example, base station 0 2710 and RRH 0 2720 may have the same cell ID. Also, as an example, base station 1 2730 and RRH 1 2740 may have the same cell ID, but are not limited to the above-described embodiment. After that, the terminals 2750 and 2760 may obtain at least one of beam search, cell search or time information based on the synchronization signal received from each of the TPs 2710, 2720, 2730, and 2740. For example, the terminals 2750 and 2760 may measure the beam as described above and obtain receive beam-related information.

As a specific example, UE1 2760 may set the reference TP to base station 0 2710 for CoMP, and the method of setting the reference TP may be as described above. At this time, as described above, UE1 2760 may measure the time of Δt_ue1 based on the reception time information of another receive beam based on reference T. After that, UE1 2760 may report Δt_ue1 to base station 0 2710. Here, UE1 2760 may further report information on Table 9 described above, and is not limited to the above-described embodiment.

In addition, UE2 2750 may also set a reference TP for CoMP. For example, UE2 2750 may set RRH1 2740 as a reference TP. After that, UE2 2750 may also measure Δt_ue2 based on the reference TP and report it to RRH 1 2740. Here, as an example, as described above, a case in which the timeline of RRH0 2720 is changed by Δt_ue2 based on UE2 2750 may be considered. Also, as an example, RRH1 2740 may be connected to base station 1 2730. Here, base station 1 2730 may transmit information obtained from terminal 2 2750 as described above to base station 0 2710 including RRH0 2720.

At this time, when base station 0 2710 wants to change the timeline of RRH0 (2720), base station 0 2710 may forward change information to base station 1 2730. At this time, as described above, the timeline change may affect other signal transmissions, and the timeline change information of RRH0 2720 may be forwarded to the terminals 2750 and 2760 through all transmission objects of base station 0 2710 and base station 1 2730. For example, in the terahertz band, it may be possible to transmit timeline change information using a base station performing CoMP or all transmission objects included therein in order to solve a problem such as a blockage phenomenon in the terahertz band, but is not limited to the above-described embodiment.

After that, UE1 2760 and terminal 2 2750 may obtain Δt using the changed timeline information of RRH 0 2720 and perform communication.

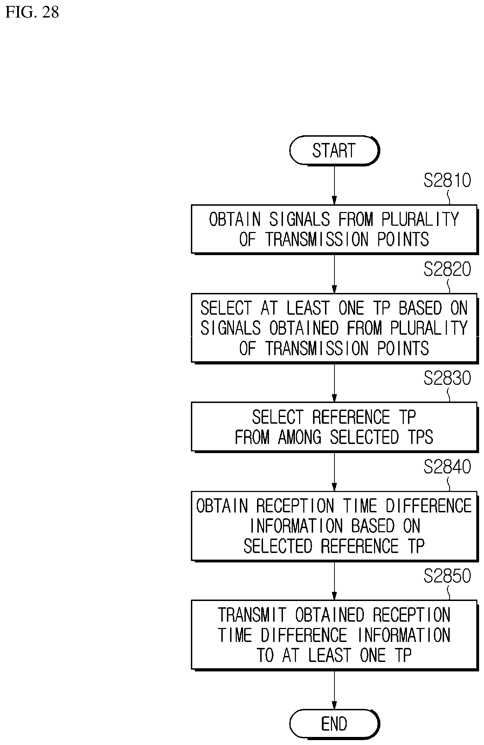

FIG. 28 is a diagram illustrating a method of operating a UE applicable to the present disclosure.

Referring to FIG. 28, a UE may obtain signals from a plurality of transmission points (TPs) (S2810). Here, as described above with reference to FIGS. 1 to 27, for example, a signal obtained from a TP may be a synchronization signal. Here, the UE may select TPs for the CoMP transmission scheme based on synchronization signals acquired from a plurality of TPs (S2820). As an example, the TP is at least one of a base station, a remote radio head (RRH) or an access point (AP) as described above. As another example, the TP may be at least one of an array antenna set generating a beam in a transmission object, a panel or a reflector. That is, the TP may refer to a specific apparatus or a transmission object estimated to generate a beam within a specific apparatus and transmit the beam at the same time, as described above.

Next, the UE may select a reference TP from among the selected TPs (S2830). In this case, as an example, the reference TP may be determined based on at least one of a cell ID, a beam index set or a TRP ID, as described above. For example, the UE may select a reference TP based on a low index or ID, as described above.

Next, the UE may obtain reception time difference information based on the selected reference TP (S2840). As an example, the UE may obtain reception time difference information by comparing the time of the signal received from the reference TP and the time of the signal received from the selected at least one TP other than the reference TP. In addition, as an example, when a difference between the time of the signal received from the reference TP and the time of the signal received from the selected at least one TP other than the reference TP is greater than CP (Cyclic Prefix) of the signal, time adjustment may be performed based on the reception time difference information. More specifically, the UE may transmit the reception time difference information to the reference TP (S2850). Here, the reference TP may prevent ISI from occurring through time adjustment if the reception time difference is greater than the CP. As another example, the reception time difference information may be set based on preset resolution. Also, as an example, the reception time difference information may be set by further considering a preset table, as described above.

Also, as an example, the reference TP may transmit the reception time difference information received from the UE to at least one UE associated with the reference TP, through which the UEs may check the transmission time of the synchronization signal or the data signal.

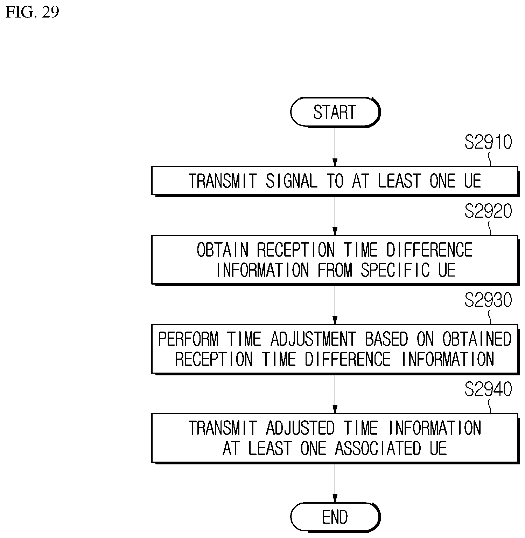

FIG. 29 is a diagram illustrating a method of operating a reference TP applicable to the present disclosure.

Referring to FIG. 29, a reference TP may transmit a signal to at least one UE (S2910). In this case, for example, a signal transmitted by the reference TP may be a synchronization signal. In addition, for example, the UE may select a TP for CoMP transmission scheme based on a synchronization signal obtained from a plurality of TPs. For example, the TP is at least one of a base station, a remote radio head (RRH) or an access point (AP) as described above. As another example, the TP may be at least one of an array antenna set generating a beam in a transmission object, a panel or a reflector. That is, the TP may refer to a specific apparatus or a transmission object estimated to generate a beam within a specific apparatus and transmit the beam at the same time, as described above.

Also, a specific UE may select a reference TP from among the selected TPs. In this case, as an example, the reference TP may be determined based on at least one of a cell ID, a beam index set or a TRP ID, as described above. That is, the reference TP may be any one of a plurality of TPs that transmit signals to a specific UE, and may be selected by the UE. For example, the UE may select a reference TP based on a low index or ID, as described above.

Next, the reference TP may obtain reception time difference information from a specific UE (S2940). As an example, the UE may obtain reception time difference information by comparing the time of the signal received from the reference TP and the time of the signal received from the selected at least one TP other than the reference TP. In addition, as an example, when the difference between the time of the signal received from the reference TP and the time of the signal received from the selected at least one TP other than the reference TP is greater than CP (Cyclic Prefix) of the signal, time adjustment may be performed based on the reception time difference information received from the reference TP (S2930). Through this, the reference TP may prevent ISI from occurring through time adjustment if the reception time difference is greater than the CP. Next, the reference TP may transmit the reception time difference information received from the specific UE to at least one UE associated with the reference TP, through which the UEs may check the transmission time of the synchronization signal or the data signal (S2940).

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Availability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a user equipment (UE) in a wireless communication system, the method comprising:

    obtaining signals from a plurality of transmission points (TPs);
    selecting at least one TP based on the signals obtained from the plurality of TPs;
    selecting a reference TP from the selected TP;
    obtaining reception time difference information based on the selected reference TP; and
    transmitting the obtained reception time difference information to the at least one TP.

2. The method of claim 1, wherein the reference TP is set based on at least one of a cell id, a beam index set or a transmission and reception (TRP) id.

3. The method of claim 1, wherein the reception time difference information is transmitted to the reference TP.

4. The method of claim 3, wherein the reception time difference information is transmitted to the reference TP along with at least one of cell id information, beam index information or TRP id information.

5. The method of claim 3, wherein the reception time difference information is transmitted to at least one UE associated with the reference TP through the reference TP.

6. The method of claim 1, wherein the reception time difference information is obtained by comparing a time of a signal received from the reference TP and a time of a signal received from the selected at least one TP other than the reference TP.

7. The method of claim 6, wherein, when a difference between the time of the signal received from the reference TP and the time of the signal received from the selected at least one TP is greater than cyclic prefix (CP), time adjustment is performed based on the reception time difference information.

8. The method of claim 7, wherein the reception time difference information is set based on preset resolution.

9. The method of claim 7, wherein the reception time difference information is set by further considering a preset table.

10. The method of claim 1, wherein the TP is at least one of a base station, a remote radio head (RRH) or an access point (AP).

11. The method of claim 1, wherein the TP is at least one of an array antenna set generating a beam within a transmission object, a panel or a reflector.

12. A user equipment (UE) operating in a wireless communication system, the UE comprising:

    at least one transmitter;
    at least one receiver;
    at least one processor; and
    at least one memory operably connected to the at least one processor and configured to store instructions for enabling the at least one processor to perform specific operations,
    wherein the specific operations comprise:

        obtaining signals from a plurality of transmission points (TPs);
        selecting at least one TP based on the signals obtained from the plurality of TPs;
        selecting a reference TP from the selected TP;
        obtaining reception time difference information based on the selected reference TP; and
        transmitting the obtained reception time difference information to the at least one TP.

13. The UE of claim 12, wherein the UE communicates with at least one of a mobile terminal, a network or an autonomous vehicle other than a vehicle including the UE.

FIG. 1

FIG. 2

FIG. 3

Device(300)

| Communication unit(310)<br>(e.g.,5G Communication unit) | Control unit(320)<br>(e.g.,processor(s)) |
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

FIG. 4

FIG. 5

**Device (200a, 200b)**

- Communication unit (512)
- Control unit (522)
- Memory unit (532)
- Driving unit (540a)
- Power supply unit (540b)
- Sensor unit (540c)
- Autonomous driving unit (540d)

552

550

**Car or autonomous driving car (500)**

- Communication unit (510)
- Control unit (520)
- Memory unit (530)
- Driving unit (540a)
- Power supply unit (540b)
- Sensor unit (540c)
- Autonomous driving unit (540d)

FIG. 6

Car or autonomous driving car (600)

Communication unit (610)

Control unit (620)

Memory unit (630)

I/O unit (640a)
(e.g., HUD)

Positioning unit (640b)
(e.g., GPS,sensor)

651

Virtual World

652

FIG. 7

700a

XR device (700a)

| Communication unit (710) |
| Control unit (720) |
| Memory unit (730) |
| I/O unit (740a) |
| Sensor unit (740b) |
| Power supply unit (740c) |

700b

FIG. 8

Robot (800)

| Communication unit (810) |
| Control unit (820) |
| Memory unit (830) |
| I/O unit (840a) |
| Sensor unit (840b) |
| Driving unit (840c) |

FIG. 9

FIG. 10

| INITIAL CELL SEARCH | SYSTEM INFORMATION RECEPTION | RANDOM ACCESS PROCEDURE | GENERAL DL/UL Tx/Rx |
|---|---|---|---|
| PSS/SSS& [DLRS]& PBCH | PDCCH/ PDSCH (BCCH) | PRACH — PDCCH/ PDSCH — PUSCH — PDCCH/ PDSCH | PDCCH/ PDSCH — PUSCH/ PUCCH |
| S1011 | S1012 | S1013  S1014  S1015  S1016 | S1017  S1018 |

- DL/UL ACK/NACK
- UE CQI/PMI RI REPORT USING PUSCH AND PUCCH

FIG. 11

| Entity 1 | Entity 2 | Entity 3 |
|----------|----------|----------|
| NAS | | NAS |
| RRC | RRC | |
| PDCP | PDCP | |
| RLC | RLC | |
| MAC | MAC | |
| PHY | PHY | |

(control plane)

| Entity 1 | Entity 2 |
|----------|----------|
| PDCP | PDCP |
| RLC | RLC |
| MAC | MAC |
| PHY | PHY |

(user plane)

FIG. 12

FIG. 13

· · · · · · | One Frame (10ms) | · · · · · ·

· · · · · · | Half Frame (5ms) | | Half Frame (5ms) | · · · · · ·

· · · · · · | subFrame 0 (1ms) | · · · · · · | subFrame 4 (1ms) | | subFrame 5 (1ms) | · · · · · · | subFrame 9 (1ms) | · · · · · ·

subframe(1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

FIG. 14

Resource grid

A carrier

A BWP

1 RB

1 RE

1 subcarrier

1 symbol

l=0 · · · · ·

k=0

FIG. 15

FIG. 16

FIG. 17

THz SMALL CELLS

THz
BACKHAUL
LINK

BACKHAUL
COMMUNICATION

VEHICLUAR
COMMUNICATION

THz DATA
CENTRE
NETWORK

THz KIOSK
DOWNLOADING

FIG. 18

FIG. 19

FIG. 20

FIG. 21

FIG. 22

FIG. 23

FIG. 24

FIG. 25

TP TRANSMISSION align(timeline)

UE1@ANTENNA0
UE2@RRH0

UE1 RECEIVED SIGNAL

UE2 RECEIVED SIGNAL

UE2@ANTENNA1
UE2@RRH1

CP | data

t

UE2 timeline

$t_{ref}$   $t_{beem8}$

FIG. 26

TP TRANSMISSION align(timeline)

UE1@ANTENNA0
UE2@RRH0

UE2 SIGNAL TRANSMISSION TIME ADJUSTMENT(3 Rt)

UE1 RECEIVED SIGNAL

UE2 RECEIVED SIGNAL

UE2@ANTENNA1
UE2@RRH1

CP | data

t

FIG. 27

EP 4 187 986 A1

FIG. 28

```
         ┌──────────┐
         │  START   │
         └────┬─────┘
              │              S2810
      ┌───────▼──────────────┐
      │ OBTAIN SIGNALS FROM  │
      │ PLURALITY OF         │
      │ TRANSMISSION POINTS  │
      └───────┬──────────────┘
              │              S2820
      ┌───────▼──────────────┐
      │ SELECT AT LEAST ONE  │
      │ TP BASED ON SIGNALS  │
      │ OBTAINED FROM        │
      │ PLURALITY OF         │
      │ TRANSMISSION POINTS  │
      └───────┬──────────────┘
              │              S2830
      ┌───────▼──────────────┐
      │ SELECT REFERENCE TP  │
      │ FROM AMONG SELECTED  │
      │ TPS                  │
      └───────┬──────────────┘
              │              S2840
      ┌───────▼──────────────┐
      │ OBTAIN RECEPTION     │
      │ TIME DIFFERENCE      │
      │ INFORMATION BASED ON │
      │ SELECTED REFERENCE TP│
      └───────┬──────────────┘
              │              S2850
      ┌───────▼──────────────┐
      │ TRANSMIT OBTAINED    │
      │ RECEPTION TIME       │
      │ DIFFERENCE           │
      │ INFORMATION TO AT    │
      │ LEAST ONE TP         │
      └───────┬──────────────┘
              │
         ┌────▼─────┐
         │   END    │
         └──────────┘
```

FIG. 29

```
          ┌─────────────┐
          │    START    │
          └──────┬──────┘
                 │              S2910
                 ▼
  ┌──────────────────────────────────────┐
  │   TRANSMIT SIGNAL TO AT LEAST ONE UE  │
  └──────────────────┬───────────────────┘
                     │            S2920
                     ▼
  ┌──────────────────────────────────────┐
  │    OBTAIN RECEPTION TIME DIFFERENCE   │
  │     INFORMATION FROM SPECIFIC UE      │
  └──────────────────┬───────────────────┘
                     │            S2930
                     ▼
  ┌──────────────────────────────────────┐
  │ PERFORM TIME ADJUSTMENT BASED ON OBTAINED│
  │  RECEPTION TIME DIFFERENCE INFORMATION │
  └──────────────────┬───────────────────┘
                     │            S2940
                     ▼
  ┌──────────────────────────────────────┐
  │    TRANSMIT ADJUSTED TIME INFORMATION │
  │        AT LEAST ONE ASSOCIATED UE     │
  └──────────────────┬───────────────────┘
                     │
                     ▼
              ┌─────────────┐
              │     END     │
              └─────────────┘
```

## INTERNATIONAL SEARCH REPORT

| International application No. |
|---|
| **PCT/KR2020/009668** |

**A.    CLASSIFICATION OF SUBJECT MATTER**

**H04W 56/00**(2009.01)i; **H04W 16/28**(2009.01)i; **H04B 7/024**(2017.01)i

According to International Patent Classification (IPC) or to both national classification and IPC

**B.    FIELDS SEARCHED**

Minimum documentation searched (classification system followed by classification symbols)

H04W 56/00(2009.01); H04B 7/26(2006.01); H04H 20/18(2008.01); H04W 48/18(2009.01); H04W 64/00(2009.01); H04W 88/02(2009.01); H04W 88/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: User Equipment, TP(Transmission Point), 참조 TP(reference TP), 수신 시간 차이 (receive time difference)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2007-0120988 A (NTT DOCOMO, INC.) 26 December 2007 (2007-12-26)<br>See paragraph [0079]; claim 10; and figure 5. | 1-6,10-13 |
| A |  | 7-9 |
| Y | KR 10-2010-0025592 A (SHARP KABUSHIKI KAISHA) 09 March 2010 (2010-03-09)<br>See claims 1 and 5. | 1-6,10-13 |
| A | JP 2014-175999 A (HITACHI INT. ELECTRIC INC.) 22 September 2014 (2014-09-22)<br>See claims 1-4. | 1-13 |
| A | FUJITSU. Discussion on Received Timing Difference in Downlink CoMP Transmission. R1-090950, 3 GPP TSG-RAN1 #56. Athens, Greece. 04 February 2009.<br>See section 2. | 1-13 |
| A | KR 10-2008-0096569 A (IPWIRELESS, INC.) 30 October 2008 (2008-10-30)<br>See paragraphs [0046]-[0048]; and figure 4. | 1-13 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 April 2021** | **21 April 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
|---|
| **PCT/KR2020/009668** |

| Patent document cited in search report | | | Publication date (day/month/year) | Patent family member(s) | | | Publication date (day/month/year) |
|---|---|---|---|---|---|---|---|
| KR | 10-2007-0120988 | A | 26 December 2007 | BR | PI0608685 | A2 | 19 January 2010 |
| | | | | CN | 101164364 | A | 16 April 2008 |
| | | | | CN | 102201831 | A | 28 September 2011 |
| | | | | CN | 102201831 | B | 13 March 2013 |
| | | | | EP | 1887823 | A1 | 13 February 2008 |
| | | | | EP | 1887823 | A4 | 29 February 2012 |
| | | | | JP | 2006-287663 | A | 19 October 2006 |
| | | | | JP | 4592477 | B2 | 01 December 2010 |
| | | | | KR | 10-1151319 | B1 | 08 June 2012 |
| | | | | RU | 2007-136023 | A | 10 May 2009 |
| | | | | RU | 2419253 | C2 | 20 May 2011 |
| | | | | TW | 200644682 | A | 16 December 2006 |
| | | | | US | 2009-0149169 | A1 | 11 June 2009 |
| | | | | US | 7912011 | B2 | 22 March 2011 |
| | | | | WO | 2006-109538 | A1 | 19 October 2006 |
| KR | 10-2010-0025592 | A | 09 March 2010 | CN | 101233703 | A | 30 July 2008 |
| | | | | CN | 102209059 | A | 05 October 2011 |
| | | | | CN | 102209059 | B | 30 July 2014 |
| | | | | EP | 1916783 | A1 | 30 April 2008 |
| | | | | EP | 1916783 | A4 | 09 January 2013 |
| | | | | JP | 2007-043330 | A | 15 February 2007 |
| | | | | JP | 2007-043331 | A | 15 February 2007 |
| | | | | JP | 2007-043332 | A | 15 February 2007 |
| | | | | JP | 4305771 | B2 | 29 July 2009 |
| | | | | JP | 4526459 | B2 | 18 August 2010 |
| | | | | JP | 4794234 | B2 | 19 October 2011 |
| | | | | KR | 10-1014933 | B1 | 15 February 2011 |
| | | | | KR | 10-1036043 | B1 | 19 May 2011 |
| | | | | KR | 10-1113433 | B1 | 21 March 2012 |
| | | | | KR | 10-2008-0040755 | A | 08 May 2008 |
| | | | | KR | 10-2010-0028124 | A | 11 March 2010 |
| | | | | US | 2010-0222063 | A1 | 02 September 2010 |
| | | | | WO | 2007-015466 | A1 | 08 February 2007 |
| JP | 2014-175999 | A | 22 September 2014 | None | | | |
| KR | 10-2008-0096569 | A | 30 October 2008 | CN | 101395824 | A | 25 March 2009 |
| | | | | CN | 101395824 | B | 12 March 2014 |
| | | | | EP | 1980037 | A1 | 15 October 2008 |
| | | | | EP | 1980037 | B1 | 01 January 2014 |
| | | | | JP | 2009-524313 | A | 25 June 2009 |
| | | | | JP | 4966318 | B2 | 04 July 2012 |
| | | | | KR | 10-1010292 | B1 | 25 January 2011 |
| | | | | US | 2007-0171853 | A1 | 26 July 2007 |
| | | | | US | 2010-0215014 | A1 | 26 August 2010 |
| | | | | US | 7711008 | B2 | 04 May 2010 |
| | | | | US | 8081597 | B2 | 20 December 2011 |
| | | | | WO | 2007-082953 | A1 | 26 July 2007 |
| | | | | WO | 2007-082953 | B1 | 11 October 2007 |

Form PCT/ISA/210 (patent family annex) (July 2019)